# EUROPÄISCHE PATENTANMELDUNG

(11) **EP 3 196 385 A1**
(43) Veröffentlichungstag der Anmeldung: **26.07.2017**
(21) Anmeldenummer: 16152225.5
(22) Anmeldetag: 21.01.2016
(51) Int. Cl.: E04H 6/18, E04H 6/30

(54) **PARKHAUS FÜR FAHRZEUGE, INSBESONDERE HOCHGARAGE, UND VERFAHREN ZUR HERSTELLUNG EINES PARKHAUSES**

(71) Anmelder: DPG Deutsche Parken GmbH, 20354 Hamburg (DE)
(72) Erfinder: SCHMITT, Vanessa Sophie, 20354 Hamburg (DE); KWAK, Thomas, 20354 Hamburg (DE); THORN, Rudolf, 20354 Hamburg (DE)
(74) Vertreter: RGTH

(57) **Zusammenfassung**

Um ein Parkhaus für Fahrzeuge bereitzustellen, welches einfach, schnell und kostengünstig zu errichten ist und den beschränkten Platz, insbesondere in urbanen Zentren, effizient nutzt, wird ein Parkhaus (100) für Fahrzeuge (10), insbesondere eine Hochgarage, vorgeschlagen, umfassend eine Erdgeschossebene (11) und mindestens eine oberhalb der Erdgeschossebene (11) angeordnete Parkgeschossebene (12), eine Tragstruktur (14) mit einem Schacht (23), mindestens eine Fördereinrichtung (25) zum im Wesentlichen vertikalen Transport von Fahrzeugen (10), wobei die Fördereinrichtung (25) in dem Schacht (23) der Tragstruktur (14) angeordnet ist, wobei die mindestens eine Parkgeschossebene (12) mindestens eine Stellfläche (16) für mindestens ein Fahrzeug (10) umfasst, wobei das Parkhaus zu einem Transfer eines Fahrzeuges (10) zwischen der Fördereinrichtung (25) und einer Parkposition auf der mindestens einen Stellfläche (16) unter eigenem Antrieb des Fahrzeuges (10) ausgebildet ist, wobei mindestens eine der Parkgeschossebenen (12) mit einer ersten Seite (15) an der Tragstruktur (14) angeordnet ist.

## Beschreibung

Die Erfindung betrifft ein Parkhaus für Fahrzeuge, insbesondere eine Hochgarage, umfassend eine Erdgeschossebene und mindestens eine oberhalb der Erdgeschossebene angeordnete Parkgeschossebene.

Insbesondere in urbanen beziehungsweise in städtischen Zentren ist das Angebot an Stellplätzen für Fahrzeuge, insbesondere für Kraftfahrzeuge, oft knapp bemessen. Grund hierfür sind neben Bebauungsplänen auch die hohen Grundstückswerte, welche die Nutzung derartiger Flächen zum Zwecke des Baus von Parkhäusern oder Hochgaragen erst ab einer bestimmten Mindestkapazität des Parkhauses rentabel werden lassen. Es besteht daher ein Mangel an Stellplätzen für Fahrzeuge, und zwar nicht nur für Besucher von Stadtzentren, sondern auch für Anlieger, welche in oder in der Nähe von Stadtzentren wohnen oder arbeiten. Gerade für diese Personen ist es oft nicht möglich, einen erschwinglichen Stellplatz zu finden.

### Stand der Technik

Aus der US 5,049,022 A ist eine mehrgeschossige Parkstruktur bekannt, welche in modularer Bauweise errichtet werden kann und deren Komponenten transportfähig sind. Dabei ist ein automatisiertes Fahrzeugparksystem vorgesehen, bei dem ein Fahrzeugführer nach der Einfahrt in einen Eingangsbereich der Parkstruktur das Fahrzeug verlässt und nachfolgend ein Computer die weitere Steuerung übernimmt. Das Fahrzeug wird in einem Parkregalverfahren auf voneinander beabstandeten Trägerelementen abgestellt.

Die DE 101 39 948 A1 offenbart ein mehrgeschossiges Gebäude mit einer antreibbaren Fördereinrichtung für den Transport von Fahrzeugen zwischen mehreren Geschossebenen. Dabei weisen mehrere Geschossebenen jeweils mindestens einen Stellplatz für ein Fahrzeug auf, und auf mehreren, einen Stellplatz aufweisenden Geschossebenen ist mindestens jeweils ein Bereich mit einer Wohn-, Geschäfts- oder ähnlichen Nutzung vorhanden.

Eine zwei- oder mehrstöckige Sammelgarage wird in der DE 24 27 113 A1 beschrieben.

Bei den aus dem Stand der Technik bekannten Parklösungen ist jedoch aufgrund der Integration der Stellplätze in Wohn- oder weitere Nutzgebäude und dadurch bedingte Anpassungsarbeiten eine Bereitstellung von Stellplätzen für einen offenen Nutzerkreis nicht möglich.

Ferner ist es bei den aus dem Stand der Technik bekannten Parklösungen nicht möglich, den für Parkflächen zur Verfügung stehenden Platz optimal zu nutzen und gleichzeitig einen uneingeschränkten Zugang der Fahrzeughalter zum eigenen Fahrzeug zu gewährleisten.

### Darstellung der Erfindung: Aufgabe, Lösung, Vorteile

Der Erfindung liegt die Aufgabe zugrunde, ein Parkhaus für Fahrzeuge, insbesondere eine Hochgarage, umfassend eine Erdgeschossebene und mindestens eine oberhalb der Erdgeschossebene angeordnete Parkgeschossebene bereitzustellen, welche einfach, schnell und kostengünstig zu errichten ist und den beschränkten Platz, insbesondere in urbanen Zentren, effizient nutzt.

Diese Aufgabe wird erfindungsgemäß durch Bereitstellung eines Parkhauses für Fahrzeuge, insbesondere eine Hochgarage, gelöst, umfassend eine Erdgeschossebene und mindestens eine oberhalb der Erdgeschossebene angeordnete Parkgeschossebene, eine Tragstruktur mit einem Schacht, mindestens eine Fördereinrichtung zum im Wesentlichen vertikalen Transport von Fahrzeugen, wobei Fördereinrichtung in dem Schacht der Tragstruktur angeordnet ist, wobei die mindestens eine Parkgeschossebene mindestens eine Stellfläche für mindestens ein Fahrzeug umfasst, wobei das Parkhaus zu einem Transfer eines Fahrzeuges zwischen der Fördereinrichtung und einer Parkposition auf der mindestens einen Stellfläche unter eigenem Antrieb des Fahrzeuges ausgebildet ist, wobei mindestens eine der Parkgeschossebenen mit einer ersten Seite an der Tragstruktur angeordnet ist.

Durch Anordnung einer Parkgeschossebene oberhalb einer Erdgeschossebene wird in vorteilhafter Weise das in städtischen Zentren zur Verfügung stehende Platzangebot in optimaler Weise genutzt. Dabei kann die Erdgeschossebene derart ausgebildet sein, dass ein Zugang oder eine Zufahrt zu dem Parkhaus, insbesondere ausschließlich, über die Erdgeschossebene erfolgt. Ferner ist eine Tragstruktur vorgesehen, welche das Parkhaus stabilisiert. Durch die Bereitstellung einer Fördereinrichtung zum im Wesentlichen vertikalen Transport von Fahrzeugen wird es möglich, Fahrzeuge, beispielsweise Kraftfahrzeuge wie Personenkraftwagen oder Motorräder, von der Erdgeschossebene zu der mindestens einen Parkgeschossebene oder zwischen Parkgeschossebenen zu transportieren, wodurch die Notwendigkeit von platzaufwändigen Rampen zwischen den Parkgeschossebenen bzw. zwischen der Erdgeschossebene und der mindestens einen Parkgeschossebene für die Beförderung von Fahrzeugen entfällt.

Zudem ist erfindungsgemäß vorgesehen, dass das Parkhaus zu einem Transfer eines Fahrzeuges zwischen der Fördereinrichtung und einer Parkposition auf der mindestens eine Stellfläche unter eigenem Antrieb des Fahrzeugs ausgebildet ist. Mit anderen Worten ist insbesondere ein automatisierter Transport oder Transfer eines Fahrzeugs zwischen der Fördereinrichtung und der Stellfläche nicht vorgesehen. Ein Fahrzeug wird somit vom Fahrzeugführer und/oder im Falle eines autonom fahrenden Fahrzeugs von der dazu ausgebildeten Steuervorrichtung des Fahrzeugs zwischen der Fördereinrichtung und der Stellfläche der Parkgeschossebene transferiert oder transportiert. Durch den Verzicht auf ein automatisiertes Parksystem wird zum einen ein kostengünstiges Parkhaus bereitgestellt, da aufwändige Steuersysteme sowie die für den Transfer des Fahrzeuges zwischen der Fördereinrichtung und der Stellfläche benötigten mechanischen Vorrichtungen wie beispielsweise Kräne, Beförderungsschlitten oder ähnliches nicht benötigt werden. Zudem werden auch mögliche Sicherheitsrisiken, welche durch den Betrieb automatisierter Systeme für sich im Parkhaus bzw. in der Hochgarage aufhaltende Personen entstehen, vermieden. Insbesondere wird es durch den Verzicht auf eine Vollautomatisierung grundsätzlich möglich, dass sich Personen, wie beispielsweise Fahrzeugführer, im Wesentlichen frei im Parkhaus bewegen können, wodurch ein uneingeschränkter Zugang zum eigenen Fahrzeug ermöglicht wird.

Ein Transfer eines Fahrzeuges unter eigenem Antrieb ist im Sinne der Erfindung so zu verstehen, dass das Fahrzeug durch Nutzung der Motorkraft des Fahrzeuges, beispielsweise der Kraft eines Verbrennungsmotors oder der Kraft eines elektrischen Motors, welcher nicht Teil des Parkhauses ist, zwischen der Fördereinrichtung und der Stellfläche bewegt wird. Insbesondere fährt der Fahrzeugführer persönlich oder eigenhändig das Fahrzeug von der Fördereinrichtung zur Stellfläche und gegebenenfalls zurück.

Zudem kann zweckmäßigerweise vorgesehen sein, dass auch ein Transfer eines Fahrzeuges aus dem Freien, das heißt aus der das Parkhaus umgebenden Umgebung oder dem Stadtverkehr, in die Fördereinrichtung oder aus der Fördereinrichtung ins Freie unter eigenem Antrieb des Fahrzeuges stattfindet. Das heißt insbesondere, dass das Fahrzeug bevorzugt vom Fahrzeugführer bzw. im Falle eines autonom fahrenden Fahrzeuges von der entsprechenden Steuereinrichtung und Steuersoftware des Fahrzeuges aus dem Stadtverkehr in die Fördereinrichtung bewegt oder transferiert wird bzw. aus der Fördereinrichtung in den Stadtverkehr transferiert oder bewegt wird.

Bevorzugt ist vorgesehen, dass die mindestens eine an der Tragstruktur angeordnete Parkgeschossebene mit einer ersten Seite hängend an der Tragstruktur befestigt ist, oder in eine entsprechende Aufnahmevorrichtung eingehängt oder eingefügt ist. Auch kann die mindestens eine Parkgeschossebene mit einer ersten Seite in die Tragstruktur integriert sein. Das heißt, in diesem Fall bildet die erste Seite der Parkgeschossebene einen Teil der Tragstruktur.

Ferner ist bevorzugt vorgesehen, dass die mindestens eine Parkgeschossebene mit einer, bevorzugt der ersten Seite der Parkgeschossebene gegenüberliegenden, zweiten Seite der Parkgeschossebene auf, bevorzugt vertikal ausgerichteten, Stützelementen, insbesondere Säulenelementen, aufliegt, bzw. mit Stützelementen, insbesondere Säulenelementen, verbunden ist.

Besonders bevorzugt ist eine erste Parkgeschossebene oberhalb der Erdgeschossebene angeordnet. Die erste Parkgeschossebene ist mit einer ersten Seite, insbesondere hängend oder eingehängt, an der Tragstruktur angeordnet. Mit einer der ersten Seite gegenüberliegenden zweiten Seite liegt die Parkgeschossebene auf Stützelementen, bevorzugt auf Säulenelementen, auf. Die Stütz- oder Säulenelemente verbinden die Erdgeschossebene mit der mindestens einen Parkgeschossebene, d.h. die Stütz- oder Säulenelemente sind mit einem ersten unteren Ende mit dem Erdboden bzw. dem Fundament des Parkhauses verbunden und mit einem zweiten, dem ersten Ende gegenüberliegenden Ende mit der Parkgeschossebene, bevorzugt mit der Unterseite der Parkgeschossebene, verbunden. An jeder der mindestens einen Parkgeschossebene können eine, zwei oder mehrere, bevorzugt vier, Stütz- oder Säulenelemente angeordnet sein.

Bevorzugt sind die Stütz- oder Säulenelemente dazu ausgebildet, durch sich im Parkhaus ändernde Gewichts- und Kraftverteilung auftretende Belastungen und Schwingungen aufzunehmen, zu tragen oder zu dämpfen. Dies bedeutet, dass die Stütz- oder Säulenelemente bevorzugt nicht dazu ausgebildet sind, einen Großteil der Gewichtskraft und aller auf das Parkhaus wirkenden Kräfte aufzunehmen. Mit anderen Worten leiten die Säulenelemente bei einem ungenutzten Parkhaus, d.h. bei einem Parkhaus in dem sich keine Fahrzeuge und Personen befinden, nur einen geringen Teil der Gewichtskraft und der weiteren auf das Parkhaus wirkenden Kräfte in das Fundament bzw. in das Erdreich ab. Im Wesentlichen liegt bei einem ungenutzten Parkhaus die mindestens eine Parkgeschossebene mit ihrer zweiten Seite auf den Säulenelementen auf, ohne die Stütz- oder Säulenelemente stark zu belasten.

Im Falle der Benutzung des Parkhauses, d.h. wenn beispielsweise ein Fahrzeug auf der Stellfläche der mindestens einen Parkgeschossebene abgestellt ist, oder wenn ein Fahrzeug zwischen der Fördereinrichtung und der Stellfläche transferiert wird, oder wenn Personen sich im Parkhaus, insbesondere auf der Parkgeschossebene aufhalten oder sich auf dieser bewegen, werden durch diese Zustände und Aktivitäten eine veränderte Kraftverteilung auf der mindestens einen Parkgeschossebene und möglicherweise auch Vibrationen oder Schwingungen in der mindestens einen Parkgeschossebene hervorgerufen. Die Stütz- oder Säulenelemente dienen dann bevorzugt dazu, die veränderte Kraftverteilung bzw. die Vibrationen oder Schwingungen aufzufangen bzw. in das Erdreich oder das Fundament des Parkhauses abzuleiten.

Jedoch ist es auch möglich, dass die Stütz- oder Säulenelemente mehr als nur einen geringen Teil, jedoch bevorzugt maximal die Hälfte, besonders bevorzugt maximal 30%, ganz besonders bevorzugt maximal 15%, der gesamten Gewichtskraft und/oder aller auf das Parkhaus wirkenden Kräfte aufnehmen, tragen oder ableiten.

Sind bevorzugt mehrere Parkgeschossebenen vorgesehen, wobei mindestens zwei Parkgeschossebenen vertikal übereinander angeordnet sind, so können auch zwischen den übereinander angeordneten Parkgeschossebenen Stütz- oder Säulenelemente angeordnet sein. Besonders bevorzugt sind dann die Stütz- oder Säulenelemente, auf welche die untere der übereinander angeordneten Parkgeschossebenen abgelegt ist, in vertikaler Richtung gesehen unterhalb der Stütz- oder Säulenelemente angeordnet, welche sich zwischen der unteren Parkgeschossebene und der darüber angeordneten Parkgeschossebene erstrecken. Ganz besonders bevorzugt bilden die übereinander angeordneten Stütz- oder Säulenelemente eine im Wesentlichen durchgängige oder durchgehende Säule, welche bevorzugt vom Erdboden beziehungsweise vom Fundament des Parkhauses bis zum Dach beziehungsweise bis zu einem Dachelement des Parkhauses reicht, wobei die im Wesentlichen durchgängige oder durchgehende Säule gegebenenfalls lediglich durch die mindestens eine Parkgeschossebene unterbrochen ist bzw. wobei die mindestens eine Parkgeschossebene mit einem Teilbereich einen Teil oder Abschnitt der im Wesentlichen durchgehenden Säule bildet.

Es kann vorgesehen sein, dass mindestens eine der Parkgeschossebenen mit einer ersten Seite kragend an der Tragstruktur angeordnet ist. Besonders bevorzugt ist die mindestens eine Parkgeschossebene als Kragboden ausgebildet. Durch die kragende Anordnung mindestens einer Parkgeschossebene an der Tragstruktur wird ermöglicht, dass die Grundfläche des Parkhauses, ohne Berücksichtigung von Überhängen, auf dem Erdboden oder einem Fundament, möglichst klein ist. Insbesondere werden die kragenden Bereiche der Parkgeschossebene in dieser Betrachtungsweise nicht zur Grundfläche gerechnet, so dass die Grundfläche des Parkhauses im Wesentlichen der Bodenfläche der Tragstruktur entspricht. Die Bodenfläche der Tragstruktur kann dabei im Wesentlichen der von der Fördereinrichtung benötigten Fläche entsprechen. Durch diese minimierte Grundfläche des Parkhauses auf dem Erdboden oder dem Fundament kann der Platz, welcher insbesondere unterhalb der untersten Parkschossebene frei wird, als weitere Parkmöglichkeit und/oder als Zufahrt und/oder als Ausfahrt für das Parkhaus genutzt werden. Zudem macht es die minimierte Grundfläche möglich, dass größere Tiefbauarbeiten entfallen und dass eine Versiegelung der Erdgeschossebene des Parkhauses einfach und kostengünstig durchzuführen ist oder dass eine Versiegelung der Erdgeschossebene des Parkhauses entfallen kann.

Ferner ist es auch möglich, dass ein erster Bereich oder Abschnitt der mindestens einen Parkgeschossebene mit einer ersten Seite kragend an der Tragstruktur angeordnet ist, während ein zweiter Bereich oder Abschnitt der mindestens einen Parkgeschossebene mit einer zweiten Seite, welche bevorzugt der ersten Seite gegenüberliegt, auf Stütz- oder Säulenelementen aufliegt.

Bevorzugt können auch mehrere Parkgeschossebenen vorgesehen sein, wobei weiter bevorzugt die mehreren Parkgeschossebenen, insbesondere alle Parkgeschossebenen, an einer ersten Seite und/oder an einer zweiten Seite und/oder an mehreren oder allen Seiten, insbesondere Außenseiten, der Tragstruktur jeweils mit einer ersten Seite an der Tragstruktur angeordnet sind. Die weiteren Parkgeschossebenen können mit einer zweiten Seite auf Stütz- oder Säulenelementen aufliegen. Sind mehrere Parkgeschossebenen übereinander angeordnet, so bilden die übereinander angeordneten Stütz- oder Säulenelemente, auf denen die jeweils übereinander angeordneten Parkgeschossebenen aufliegen, eine im Wesentlichen durchgehende Säule vom Erdboden beziehungsweise vom Fundament des Parkhauses bis zum Dach des Parkhauses. Jedoch kann es auch vorgesehen sein, dass die weiteren Parkgeschossebenen kragend an der Tragstruktur angeordnet sind. Auch Kombinationen von kragend angeordneten Parkgeschossebenen und auf Stütz- oder Säulenelementen aufliegenden Parkgeschossebenen sind denkbar.

Es können bevorzugt auch zwei oder mehr Fördereinrichtungen vorgesehen sein, wobei weiter bevorzugt die zwei und/oder die mehreren, besonders bevorzugt alle, Fördereinrichtungen in und/oder an der Tragstruktur und/oder in einem Schacht der Tragstruktur angeordnet sind.

Ferner kann die mindestens eine Parkgeschossebene bevorzugt zwei oder mehr Stellplätze aufweisen. Auch können mehrere, bevorzugt alle Parkgeschossebenen mindestens einen, bevorzugt zwei oder mehr, Stellplätze aufweisen.

Bevorzugt kann auch vorgesehen sein, dass mindestens eine Stellfläche auf der Erdgeschossebene des Parkhauses vorgesehen ist. Hierdurch wird eine weiter optimierte Platznutzung erzielt.

Zudem kann auch bevorzugt vorgesehen sein, dass das Parkhaus nicht nur Parkgeschossebenen oberhalb der Erdgeschossebene aufweist, sondern dass darüber hinaus auch mindestens eine Parkgeschossebene unterhalb der Erdgeschossebene, das heißt mindestens eine im Erdreich mittels eines Tiefbauverfahrens errichtete Parkgeschossebene, vorhanden ist.

Durch das Vorsehen von unterhalb der Erdoberfläche angeordneten Parkgeschossebenen kann eine weiter optimierte Nutzung des für das Parkhaus vorgesehenen Baugrundes erzielt werden.

Ferner bevorzugt können auch mehrere Parkgeschossebenen, insbesondere alle Parkgeschossebenen, oberhalb der Erdgeschossebene angeordnet sein.

Unter die Formulierung eines im Wesentlichen vertikalen Transportes fallen gemäß der vorliegenden Erfindung auch Transportbewegungen, welche unter einem Winkel zur Senkrechten stattfinden, beispielsweise in einem Winkel von bis zu 45° zur Senkrechten. Jedoch ist besonders bevorzugt vorgesehen, dass eine Abweichung der Transportrichtung von der Senkrechten nur im einstelligen Gradbereich stattfindet oder dass die Abweichung von der Senkrechten insbesondere maximal ein Grad beträgt.

Bevorzugt ist vorgesehen, dass das Parkhaus ein Fertigteilgebäude ist.

Dies bedeutet, dass das Parkhaus im Fertigteilbauverfahren errichtet wird. Beim Fertigteilbauverfahren werden vorgefertigte Elemente, welche beispielsweise Teil der Tragstruktur oder der Parkgeschossebenen, der Stellflächen oder der Fördereinrichtung sind, verwendet. Hierdurch entfällt eine aufwändige Anpassung der für die Errichtung des Parkhauses benötigten Teile und Elemente am Errichtungsort. Darüber hinaus kann durch das Fertigteilbauverfahren eine Standardisierung des Parkhauses erreicht werden. Durch die Standardisierung werden die Kosten gesenkt und die Bau- bzw. Errichtungszeit für das Parkhaus verringert. Zudem ist es durch die Standardisierung der Bauteile im Fertigteilbauverfahren auch möglich, Maximalgrößen dieser Bauteile festzulegen, sodass die benötigten Teile auch an schwer zugängliche Orten geliefert und dort verbaut werden können.

Besonders bevorzugt ist vorgesehen, dass die Fördereinrichtung zum Transport von Fahrzeugen und von Personen mit oder ohne Fahrzeug ausgebildet ist.

Dabei ist es besonders vorteilhaft, dass die Fördereinrichtung auch zum Transport von Personen ohne Fahrzeug ausgebildet ist. Eine Person, beispielsweise ein Fahrzeugführer oder Fahrzeugbesitzer, kann somit sein Fahrzeug über die Erdgeschossebene in die Fördereinrichtung unter eigenem Antrieb des Fahrzeuges bewegen. Darauffolgend wird das Fahrzeug mit dem Fahrzeugführer von der Erdgeschossebene in eine Parkgeschossebene angehoben oder abgesenkt. Hierauf fährt oder führt der Fahrzeugführer sein Fahrzeug aus der Fördereinrichtung und bewegt es in eine Parkposition auf der mindestens einen Stellfläche der Parkgeschossebene. Der Fahrzeugführer kann dann sein Fahrzeug verlassen, dieses gegebenenfalls abschließen oder verriegeln und dann mittels der Fördereinrichtung von der Parkgeschossebene wieder zur Erdgeschossebene zurückkehren, ohne dass zusätzliche Transportmittel oder Transportwege hierfür vorgesehen sein müssen.

Durch den Verzicht auf zusätzliche spezialisierte oder speziell für Personen vorgesehene Fördereinrichtungen wie Personenaufzüge können die Kosten für das Parkhaus weiter gesenkt werden.

Weiter bevorzugt ist vorgesehen, dass die Tragstruktur ausgebildet ist, einen Großteil der, besonders bevorzugt im Wesentlichen die gesamte, Gewichtskraft des Parkhauses und alle auf das Parkhaus wirkenden Kräfte aufzunehmen, wobei die Tragstruktur insbesondere zentral im Parkhaus angeordnet ist.

Ist die Tragstruktur dazu ausgebildet, im Wesentlichen die gesamte Gewichtskraft des Parkhauses und alle auf das Parkhaus wirkenden Kräfte aufzunehmen, so bedeutet das insbesondere, dass die auf die Parkgeschossebene wirkenden Kräfte, beispielsweise das Gewicht der Parkgeschossebene selbst oder von auf der Parkgeschossebene angeordneten Fahrzeugen, über den Anschluss der Parkgeschossebene an die Tragstruktur auf die Tragstruktur und von dort auf den Erdboden oder das Fundament übertragen werden. Mit anderen Worten ist es bevorzugt, dass die Tragstruktur dasjenige mit dem Erdboden oder mit einem Fundament des Parkhauses verbundene Statikelement des Parkhauses ist, welches einen Großteil der Gewichtskraft und der auf das Parkhaus wirkenden Kräfte in das Erdreich ableitet.

Weiter besonders bevorzugt weist die Tragstruktur eine im Wesentlichen rechteckige oder quadratische Grund- oder Bodenfläche auf. Die mindestens eine Parkgeschossebene ist dann an einer ersten Außenseite der Tragstruktur oberhalb der Erdgeschossebene angeordnet. Weitere Parkgeschossebenen können sich in vertikaler Richtung oberhalb der ersten Parkgeschossebene befinden und sind ebenfalls mit einer ersten Seite an der Tragstruktur angeordnet. Die weiteren Parkgeschossebenen können kragend an der Tragstruktur angeordnet sein, jedoch können die weiteren Parkgeschossebenen auch mit einer zweiten Seite auf Säulen- oder Stützelementen aufliegen oder abgelegt bzw. abgestützt werden. Besonders bevorzugt sind auf einer der ersten Außenseite der Tragstruktur gegenüberliegenden zweiten Außenseite der Tragstruktur ebenfalls Parkgeschossebenen, bevorzugt in gleicher Höhe wie die Parkgeschossebenen auf der ersten Außenseite der Tragstruktur, angeordnet. Es kann auch vorgesehen sein, dass an drei oder sogar an allen vier Außenseiten der Tragstruktur Parkgeschossebenen an der Tragstruktur angeordnet sind. Je nach vorgesehener Anordnung der Parkgeschossebenen an der Tragstruktur können unterschiedliche Raumkonzepte umgesetzt bzw. eine optimierte Nutzung des zur Verfügung stehenden Platzes erzielt werden.

Besonders bevorzugt ist es, dass die Parkgeschossebenen an genau zwei gegenüberliegenden Außenseiten der Tragstruktur, welche im Wesentlichen eine rechteckige Grund- oder Bodenfläche hat, angeordnet sind. Hierdurch entsteht ein Parkhaus, welches in einer ersten Ausdehnungsrichtung oder Längsrichtung im Wesentlichen länglich ist, wohingegen es in einer zu dieser Längsrichtung rechtwinkligen Querrichtung eher schmale Abmessungen aufweist. Durch diese längliche Ausgestaltung des Parkhauses wird es möglich, das Parkhaus in viele der in urbanen Zentren vorhandenen schmalen Grundstücke einzufügen.

Weiter ist es besonders bevorzugt, dass die Zugänge bzw. Eingänge zur Fördereinrichtung, wie beispielsweise eine Parkhauseinfahrt, sich auf der gleichen Außenseite oder den gleichen Außenseiten der Tragstruktur befinden, an der oder denen auch die an der Tragstruktur angeordneten Parkgeschossebenen angeordnet sind. Dies bedeutet, dass ein Fahrzeugführer sein Fahrzeug beispielsweise vorwärts in die Fördereinrichtung einfahren kann, dass das Fahrzeug dann mit der Fördereinrichtung von der Erdgeschossebene in eine Parkgeschossebene transportiert wird und dass der Fahrzeugführer dann sein Fahrzeug rückwärts oder vorwärts auf eine Stellfläche der Parkgeschossebene fährt, je nachdem ob die Parkgeschossebene sich auf der Außenseite des Ein- oder Zugangs zur Fördereinrichtung oder auf der dieser Außenseite gegenüberliegenden Außenseite der Tragstruktur befindet. Durch eine derartige Anordnung der Eingänge oder Zugänge und der mindestens einen Parkgeschossebene zueinander werden aufwändige Rangiervorgänge zur Ausrichtung des Fahrzeuges, beispielsweise auf der Parkgeschossebene, nicht mehr benötigt.

Prinzipiell ist jedoch auch möglich, dass der Ein- oder Zugang zu der Fördereinrichtung, beispielsweise eine Parkhauseinfahrt, sich auf einer anderen Außenseite der Tragstruktur befindet als jener Außenseite, an welcher die Parkgeschossebene angeordnet ist. In einem solchen Fall kann es vorteilhaft sein, dass die Fördereinrichtung dazu ausgebildet ist, das Fahrzeug entsprechend auszurichten, sodass dieses in bequemer und einfacher Weise vom Fahrzeugführer aus der Fördereinrichtung unter eigenem Antrieb in eine Parkposition auf der mindestens einen Stellfläche der mindestens einen Parkgeschossebene bewegt werden und dort geparkt werden kann.

Insbesondere kann sich eine Parkhauseinfahrt in der Erdgeschossebene auf einer ersten Außenseite der Tragstruktur befinden. Zusätzlich kann sich eine zweite Parkhauseinfahrt auf einer zweiten, insbesondere der ersten Außenseite gegenüberliegenden, Außenseite der Tragstruktur befinden. Liegt die zweite Parkhauseinfahrt auf der der ersten Außenseite gegenüberliegenden zweiten Außenseite, so kann diese auch als Parkhausausfahrt dienen und umgekehrt. Insbesondere ist es bevorzugt, dass ein Fahrzeugführer sein Fahrzeug in die Fördereinrichtung über die erste Parkhauseinfahrt hineinfahren kann, und die Fördereinrichtung beim Verlassen des Parkhauses, beispielsweise nachdem er mit dem Fahrzeug die mindestens eine Parkgeschossebene verlässt, über die zweite Parkhauseinfahrt beziehungsweise die Parkhausausfahrt verlassen kann. Dies bedeutet, dass die Fördereinrichtung sowohl zur ersten als auch zur zweiten Parkhauseinfahrt beziehungsweise Parkhausausfahrt eine Ein- beziehungsweise Ausfahrt aufweisen kann. Bei zum Zugang freigegebener Fördereinrichtung, beispielsweise bei geöffneten Toren der Fördereinrichtung, stellt diese dann eine Durchfahrmöglichkeit von der Parkhauseinfahrt durch die Fördereinrichtung zur Parkhausausfahrt dar. Wendemanöver werden dadurch unnötig.

Durch die zentrale Anordnung der Tragstruktur im Parkhaus wird eine optimale Krafteinleitung in den Erdboden oder in das Fundament des Parkhauses sowie eine optimale Gewichtsverteilung der gesamten Parkhausstruktur ermöglicht. Die Tragstruktur ist insbesondere dann zentral angeordnet, wenn diese in einer Aufsicht auf das Parkhaus von oben in etwa mittig in einer Längsrichtung und/oder mittig in einer zur Längsrichtung rechtwinkligen Querrichtung des Parkhauses angeordnet ist.

In einer weiter bevorzugten Ausführungsform ist vorgesehen, dass die Tragstruktur des Parkhauses eine Tragsäule mit einem Schacht für die Fördereinrichtung ist, und dass die Fördereinrichtung in dem Schacht der Tragsäule angeordnet ist.

Durch diese bevorzugte Ausgestaltung erfüllt die Tragstruktur zwei Aufgaben zugleich. Zum einen dient sie zur Abstützung und zur Aufnahme der Kräfte, insbesondere der, im Wesentlichen gesamten, Gewichtskraft des Parkhauses. Zum anderen kann die Fördereinrichtung im Schacht der Tragstruktur angeordnet sein. Dies ergibt eine platzsparende und zudem kostengünstige Ausgestaltung des Parkhauses.

Weiter bevorzugt kann vorgesehen sein, dass die Fördereinrichtung eine zum Transport von Fahrzeugen und Personen ausgebildete Aufzugsanlage, bevorzugt ein Lift oder ein Fahrstuhl, besonders bevorzugt ein Seilaufzug, ist.

Derartige Aufzugsanlagen, Lifte, Fahrstühle oder Seilaufzüge, sind zuverlässig, platzsparend und kostengünstig zu montieren, einzubauen und zu verwenden. Zudem benötigen derartige Fördereinrichtungen eine Grundfläche, welche in etwa der Grundfläche der Tragstruktur entspricht und sind somit besonders geeignet, in einem Schacht der Tragstruktur angeordnet zu werden.

Es ist jedoch auch möglich, dass die Fördereinrichtung eine Hebebühne oder eine anderweitig zum Transport von Fahrzeugen und/oder Personen geeignete Einrichtung ist. Vorteilhafterweise ist die als Aufzugsanlage, insbesondere als Seilaufzug, ausgebildete Fördereinrichtung zum Transport von Fahrzeugen und Personen, auch ohne Fahrzeug, ausgebildet, so dass sich Personen auch ohne ein mitgeführtes Fahrzeug zwischen den verschiedenen Parkgeschossebenen und der Erdgeschossebene mittels der Aufzugsanlage bewegen können. Hierdurch wird es insbesondere möglich, dass Personen ohne Fahrzeug in das Parkhaus eintreten, mit der Fördereinrichtung, beispielsweise der Aufzugsanlage, auf eine bestimmte Parkgeschossebene befördert werden, ihr Fahrzeug in die Fördereinrichtung unter eigenem Antrieb des Fahrzeuges transferieren, mit der Fördereinrichtung oder der Aufzugsanlage zusammen mit ihrem Fahrzeug wieder in die Erdgeschossebene befördert werden und schließlich mit dem Fahrzeug das Parkhaus verlassen.

Bevorzugt ist ferner vorgesehen, dass die mindestens eine Parkgeschossebene mindestens ein Bodenelement aufweist, wobei das mindestens eine Bodenelement mindestens einen Teil der Stellfläche der mindestens einen Parkgeschossebene bildet.

Dabei ist es besonders bevorzugt vorgesehen, dass das mindestens eine Bodenelement, insbesondere alle Bodenelemente, eine im Wesentlichen massive, das heißt keine Löcher und/oder Durchbrüche und/oder Hohlräume aufweisende Struktur ist beziehungsweise sind. Hohlräume können jedoch dann vorgesehen sein, wenn diese zur Gewichtseinsparung dienen. Durch das Vorsehen mindestens eines Bodenelementes wird eine Stellfläche oder zumindest ein Teil der Stellfläche bereitgestellt, auf der ein Fahrzeugführer sein Fahrzeug abstellen kann. Bildet das Bodenelement nur einen Teil der Stellfläche, so können weitere Bodenelemente vorgesehen und aneinander angrenzend angeordnet sein, um eine gesamte oder vollständige Stellfläche bereitzustellen.

Das mindestens eine Bodenelement kann dabei mindestens eine Parkgeschossebene bilden. Bevorzugt bildet das mindestens eine Bodenelement einen Teil der Parkgeschossebene, d.h. die mindestens eine Parkgeschossebene umfasst mehreren Bodenelemente bzw. wird von diesen gebildet.

Bevorzugt umfasst die mindestens eine Parkgeschossebene zwei, drei, vier oder mehr Bodenelemente, welche zur Ausbildung der Parkgeschossebene nebeneinander angeordnet sind. Besonders bevorzugt sind die Bodenelemente einer Parkgeschossebene parallel zueinander ausgerichtet und erstrecken sich jeweils von der Tragstruktur ausgehend von der Tragstruktur weg. Dabei sind die Bodenelemente mit einer ersten Seite an der Tragstruktur angeordnet. Besonders bevorzugt sind die Bodenelemente mit einer, bevorzugt der ersten Seite gegenüberliegenden, zweiten Seite auf Stütz- oder Säulenelementen abgelegt oder liegen auf diesen auf.

Auch kann die mindestens eine Parkgeschossebene im Wesentlichen identisch mit dem Bodenelement sein. Das Bodenelement, welches dann insbesondere die Parkgeschossebene bildet, kann mit einer ersten Seite, insbesondere hängend oder eingehängt, an der Tragstruktur angeordnet sein. Ferner ist bevorzugt vorgesehen, dass das mindestens eine Bodenelement mit einer zweiten Seite, welche bevorzugt der ersten Seite gegenüberliegt, auf einem Stütz- oder Säulenelement aufliegt, abgelegt oder abgestützt ist.

Bei der Errichtung des Parkhauses kann zunächst ein Teil der Tragstruktur gebaut oder errichtet werden. Dann kann die mindestens eine Parkgeschossebene, bevorzugt das mindestens eine Bodenelement mit einer ersten Seite an der Tragstruktur angeordnet werden, beispielsweise durch Einhängen oder durch Integration der ersten Seite der mindestens einen Parkgeschossebene in die Tragstruktur. Im nächsten Schritt kann dann fortgefahren werden, die Tragstruktur zu errichten. Durch dieses Vorgehen wird eine modulare, dem Fertigteilbauverfahren entsprechende Bauweise ermöglicht.

Das mindestens eine Bodenelement kann zudem mindestens eine Verstärkung umfassen, welche dem Bodenelement Stabilität verleiht. Bevorzugt ist dann das Bodenelement zwischen den Verstärkungen mit einer geringeren Dicke als am Ort der Verstärkungen ausgebildet. Die Verstärkungen können Träger oder Abschnitte von Trägern sein, welche in das mindestens eine Bodenelement integriert sind und/oder Teil des Bodenelements sind. Die Verstärkungen, insbesondere die Träger, können dazu dienen, die Gewichtskraft der mindestens einen Parkgeschossebene in die Tragstruktur abzuleiten. Dafür kann das mindestens eine Bodenelement über die Verstärkung, insbesondere die Träger, an die Tragstruktur angeschlossen werden. Das mindestens eine Bodenelement umfasst besonders bevorzugt Stahlbeton. Der Aufbau des mindestens einen Bodenelements ist dann gegeben durch mindestens einen Träger, insbesondere einen Stahlbetonträger oder Stahlträger, welcher als Verstärkung in das Bodenelement integriert ist. Bodenelement und Träger bilden bevorzugt eine bauliche Einheit, welche in einem Fertigteilbauverfahren herstellbar ist.

Das mindestens eine Bodenelement kann mit einer ersten Seite mittels der dort befindlichen Enden der Träger des Bodenelements an der Tragstruktur angeschlossen oder angeordnet sein. Liegt das mindestens eine Bodenelement mit einer zweiten Seite auf Stütz- oder Säulenelementen auf, so ist besonders bevorzugt vorgesehen, dass das Bodenelement mit einem Abschnitt der Verstärkung, insbesondere mit einem Bereich des Bodenelements, welcher den Träger enthält, auf dem Stütz- oder Säulenelement aufliegt. Auch kann der Träger im Bereich der Auflage des mindestens einen Bodenelements auf einem Stütz- oder Säulenelement direkt mit dem Stütz- oder Säulenelement verbunden oder an diesem angeordnet oder angeschlossen sein.

Ferner kann auch vorgesehen sein, dass mindestens ein Träger, insbesondere ein Kragträger, kragend an der Tragstruktur befestigt ist, wobei das mindestens eine Bodenelement, bevorzugt alle Bodenelemente, auf dem mindestens einen Träger, insbesondere auf dem Kragträger, angeordnet ist beziehungsweise sind.

Dabei kann es auch vorgesehen sein, dass das mindestens eine Bodenelement, welches bevorzugt die Parkgeschossebene oder einen Teil der Parkgeschossebene bildet, mit einem ersten Bereich auf dem mindestens einen Träger, insbesondere dem Kragträger angeordnet ist, während es mit einem zweiten Bereich auf Stütz- oder Säulenelementen aufliegt, abgelegt oder abgestützt ist.

Auch kann der Träger, insbesondere der Kragträger, mit einem, bevorzugt der Tragstruktur abgewandten, Ende auf Stütz- oder Säulenelementen aufliegen, abgelegt oder abgestützt sein. In einem solchen Fall ist bevorzugt vorgesehen, dass das mindestens eine Bodenelement nicht auf Stütz- oder Säulenelementen aufliegt, sondern dass nur der Träger auf Stütz- oder Säulenelementen aufliegt.

In dem Parkhaus können verschiedene Träger vorkommen oder verwendet werden. So können beispielsweise Träger im Aufbau der Tragstruktur vorgesehen sein. Jedoch können bevorzugt auch Kragträger vorgesehen sein, welche kragend an der Tragstruktur befestigt sind. Durch die kragende Anordnung der Kragträger an der Tragstruktur werden durch die freien Enden der Kragträger Aufnahmebereiche geschaffen, auf denen das mindestens eine Bodenelement angeordnet werden kann. Vorteilhafterweise muss durch die Verwendung von Kragträgern oder Trägern die mindestens eine Parkgeschossebene nicht als Ganzes bzw. nicht in einem Stück in kragender Weise an der Tragstruktur angeordnet werden. Vielmehr können vorteilhafterweise bei der Errichtung des Parkhauses Träger oder Kragträger an der Tragstruktur vorgesehen werden. Erst nach Errichtung zumindest eines Teils der Tragstruktur und der an der Tragstruktur befestigten Kragträger kann dann das mindestens eine Bodenelement auf dem Träger oder dem Kragträger angeordnet werden. Hierdurch wird eine modulare, dem Fertigteilbauverfahren nachkommende Bauweise, welche insbesondere kostensparend ist, ermöglicht. Insbesondere können mehr als ein Träger oder Kragträger vorgesehen sein. So können beispielsweise für jede Parkgeschossebene, welche an einer Außenseite der Tragstruktur angeordnet ist, zwei, drei oder vier bzw. mehr Träger oder Kragträger vorgesehen sein, wobei die Bodenelemente dann auf jeweils zwei, drei, vier oder mehr benachbarten Kragträgern aufgelegt oder angeordnet werden. Hierdurch wird eine stabile und kostengünstige Konstruktion erzielt. Zudem können im Falle von Beschädigungen einzelne Bodenelemente ausgetauscht werden, sodass eine beispielsweise durch Umwelteinflüsse oder Abnutzung beschädigte Parkgeschossebene nur zum Teil ausgetauscht werden muss, und zwar nur zu dem Teil, welcher die Schäden aufweist.

Weiter ist bevorzugt vorgesehen, dass der Träger, insbesondere der Kragträger, ein Profilträger, bevorzugt ein Profilträger mit einem T-Profil oder einem Doppel-T-Profil oder einem I-Profil, ist, wobei der Träger, insbesondere der Kragträger, besonders bevorzugt ein Stahlbetonträger oder ein Stahlträger ist.

Besonders bevorzugt ist der Träger, insbesondere der Kragträger, kein Stahlträger.

Die Verwendung von Profilträgern ist besonders vorteilhaft, da Profilträger besonders stabil gegenüber senkrecht zu ihrer Längsrichtung wirkende Kräfte sind. Sie sind daher besonders geeignet, das Gewicht der Parkgeschossebene, insbesondere der Bodenelemente der Parkgeschossebenen, zu tragen und über den Befestigungsbereich der Kragträger an der Tragstruktur in die Tragstruktur zu übertragen, woraufhin die Tragstruktur die Kräfte, insbesondere die Gewichtskraft des Parkhauses und die auf dem Parkhaus lastenden Kräfte, in das Fundament oder in das Erdreich beziehungsweise den Erdboden ableitet. Dabei ist es besonders vorteilhaft, wenn T-Profil-, Doppel-T-Profil- oder I-Profil-Träger vorgesehen werden, da diese eine besonders zweckmäßige Stabilität für die Zwecke des Parkhauses aufweisen. Auch ist die Verwendung von Stahlbetonträgern besonders vorteilhaft, da diese in großen Mengen herstellbar sind, besonders stabil, witterungsbeständig und zudem kostengünstig sind. Stahlbetonbauteile, insbesondere Stahlbetonträger, sind zudem aus Brandschutzgründen besonders vorteilhaft. Stahlträger können jedoch vorgesehen sein, sollten sich ändernde Brandschutzanforderungen dies ermöglichen.

Weiter bevorzugt ist vorgesehen, dass das Bodenelement eine Bodenplatte ist, wobei die Bodenplatte bevorzugt Stahlbeton aufweist oder aus Stahlbeton besteht.

Ist die mindestens eine Parkgeschossebene aus dem Bodenelement gebildet, so ist somit auch die mindestens eine Parkgeschossebene als Bodenplatte ausgebildet welche bevorzugt Stahlbeton aufweist oder aus Stahlbeton besteht.

Durch Ausbildung des Bodenelementes als Bodenplatte wird insbesondere dafür Sorge getragen, dass das Bodenelement keine Löcher oder Durchbrüche oder ähnliches aufweist. Hohlräume zur Gewichtsreduzierung können hingegen vorgesehen sein. Zudem weist eine Platte im Allgemeinen große Abmessungen in zwei Dimensionen auf, wobei in einer zu den zwei Dimensionen senkrechten dritten Dimension die Abmessungen der Platte in der Regel verhältnismäßig klein sind. Es wird somit ein insbesondere flaches und daher gewichtssparendes Bodenelement bereitgestellt. Die Bodenplatten weisen Abmessungen auf, sodass sie bevorzugt auf mindestens zwei benachbarten Kragträgern oder Trägern der Tragstruktur angeordnet werden können. Eine Verwendung von Stahlbeton in den Bodenplatten bzw. aus Stahlbeton bestehende Betonplatten ist bzw. sind besonders zweckmäßig, da Stahlbeton bei verhältnismäßig geringem Gewicht besonders stabil ist und somit für die Zwecke des Parkhauses, sprich der Aufnahme von Gewichtskräften von Fahrzeugen, besonders geeignet ist. Zudem sind Stahlbetonplatten einfach in standardisierter Form herstellbar und beziehbar. Die Verwendung von Stahlbeton für die Bodenplatten oder die Verwendung von Bodenplatten, welche Stahlbeton aufweisen, fördert somit insbesondere die Bauweise oder Errichtungsweise des Parkhauses in einem Fertigteilbauverfahren.

Die mindestens eine Bodenplatte kann zudem mindestens eine Verstärkung umfassen, welche der Bodenplatte Stabilität verleiht. Bevorzugt ist dann die Bodenplatte zwischen den Verstärkungen mit einer geringeren Dicke als am Ort der Verstärkungen ausgebildet. Die Verstärkungen können Träger oder Abschnitte von Trägern sein, welche in die mindestens eine Bodenplatte integriert sind und/oder Teil der Bodenplatte sind.

Weiter bevorzugt ist vorgesehen, dass die Tragstruktur mindestens ein Schachtwandelement umfasst, wobei das mindestens eine Schachtwandelement bevorzugt Stahlbeton aufweist oder aus Stahlbeton besteht.

Ebenso wie bei den als Bodenplatten ausgebildeten Bodenelementen ergeben sich durch die Verwendung von Schachtwandelementen für die Tragstruktur die Vorteile eines kostengünstigen Errichtungsverfahrens für das Parkhaus in einer Fertigteilbauweise. Zudem führt die Verwendung von Schachtwandelementen für die Tragstruktur zu einer vereinfachten Bauweise, da durch die Verwendung von, insbesondere vorgefertigten und/oder standardisierten, Schachtwandelementen eine Tragstruktur mit im Wesentlichen rechteckiger oder quadratischer Grund- beziehungsweise Bodenfläche schnell und kostengünstig errichtet werden kann. Bevorzugt sind bei der Errichtung des Parkhauses auch Versorgungsleitungen für Strom und/oder Wasser vorzusehen. Eine Tragstruktur aus Schachtwandelementen ist stabil, witterungsbeständig und kann innerhalb kürzester Zeit errichtet werden.

Bevorzugt sind für die Versorgungsleitungen, insbesondere für die Versorgungsleitung für Strom, standardisierte Kabelbäume vorgesehen, welche besonders bevorzugt in einer Nische oder Aussparung in den Schachtwandelementen angeordnet sind. Durch die Verwendung von standardisierten Kabelbäumen wird eine einfache Wartung und Errichtung des Parkhauses und ein Verringerung der Baukosten ermöglicht. Grundsätzlich ist eine Erschließung des Parkhauses mit Versorgungsleitung für Wasser nicht vorgesehen. Jedoch kann es möglich sein, dass das Parkhaus eine Sprinkler- oder Bewässerungsanlage aufweist. In einem solchen Fall können auch standardisierte Versorgungsleitung für Wasser vorgesehen werden.

In einer besonders bevorzugten Ausgestaltung ist vorgesehenen, dass die Tragstruktur mindestens ein U-Portal und/oder E-Portal, welches bevorzugt Stahlbeton aufweist, umfasst, wobei das U-Portal und/oder das E-Portal besonders bevorzugt eine Betonüberdeckung mit einer Dicke von mindestens 5 cm der Stahlelemente des Stahlbetons aufweist.

Die U-Portale und/oder die E-Portale können zweckmäßigerweise dazu verwendet werden, um auf der mindestens einen Parkgeschossebene und/oder auf der Erdgeschossebene eine Ein- beziehungsweise Ausfahrt der Fördereinrichtung zu der Parkgeschossebene und/oder zum Stadtverkehr zu umranden beziehungsweise zu verstärken oder zu stabilisieren.

Bevorzugt sind die Stahlelemente des für die U-Portale und/oder die E-Portale verwendeten Stahlbetons von einer Schicht aus Beton mit einer Dicke von mindestens 5 cm überdeckt. Hierdurch werden stabile und insbesondere witterungsfeste bzw. gegenüber den auf sie wirkenden Kräften widerstandsfähige U-Portale und/oder E-Portale bereitgestellt.

Weiter bevorzugt ist beziehungsweise sind mindestens ein Fassadenelement, bevorzugt mehrere Fassadenelemente, vorgesehen, wobei das Fassadenelement bevorzugt durchsichtig oder teildurchsichtig ausgebildet ist, wobei besonders bevorzugt das Fassadenelement außenseitig an dem Parkhaus angeordnet ist.

Die Fassadenelemente können dabei die mindestens eine Parkgeschossebene, bevorzugt alle Parkgeschossebenen, zu allen Seiten einfassen, gegebenenfalls mit Ausnahme der ersten Seite der Parkgeschossebene, welche, gegebenenfalls kragend, an der Tragstruktur angeordnet ist.

Die Fassadenelemente erstrecken sich bevorzugt über die gesamte Höhe des Parkhauses oder jeweils über die gesamte Höhe der einzelnen Parkgeschossebenen, und weisen daher bevorzugt eine Höhe auf, welche dem Abstand einer Parkgeschossebene zu der darüber liegend angeordneten Parkgeschossebene entspricht.

Die Fassadenelemente können dabei insbesondere nur an einer obersten Parkgeschossebene oder einem Parkhausdach und einer untersten Parkgeschossebene befestigt sein und sich somit zwischen der obersten Parkgeschossebene beziehungsweise dem Parkhausdach und der untersten Parkgeschossebene erstrecken. Auch kann vorgesehen sein dass das Fassadenelement unterbrochen und in mehrere Fassadenelemente unterteilt ist, wobei die einzelnen Fassadenelemente sich jeweils nur zwischen einer ersten Parkgeschossebene und einer direkt darüber liegenden zweiten Parkgeschossebene erstrecken.

Die Fassadenelemente dienen bevorzugt als Sicherungsmittel für die mindestens eine Parkgeschossebene, sodass Personen, welche sich insbesondere auf einer höhergelegenen Parkgeschossebene befinden, vor einem Sturz von der Parkgeschossebene gesichert sind. Durch das Vorsehen von durchsichtigen oder teildurchsichtigen Fassadenelementen wird zum einen ermöglicht, dass Tageslicht auf die Parkgeschossebenen fällt, wodurch zumindest tagsüber eine zusätzliche Beleuchtung der Parkgeschossebenen nicht vorgesehen werden muss. Hierdurch lassen sich Strom- und somit Unterhalts- und Betriebskosten des Parkhauses verringern.

Ferner gestattet es die Verwendung von durchsichtigen oder teildurchsichtigen Fassadenelementen, dass die Parkgeschossebenen von außerhalb des Parkhauses einsichtig sind.

Zudem ist es auch möglich, dass die Fassadenelemente zur Anbringung von Werbeflächen oder anderen Informationsträgern in Form von Postern oder Folien oder ähnlichem geeignet sind. Insbesondere können die Fassadenelemente als bedruckte Folien ausgebildet sein, oder zumindest in Teilbereichen bedruckte Folie aufweisen oder bedruckte Folien umfassen.

Insbesondere können Werbeelemente vor die Fassadenelemente auf deren Außenseite gehängt werden.

Weiter bevorzugt umfasst das mindestens eine Fassadenelement mindestens eine Lage Drahtgewebe, wobei das Fassadenelement bevorzugt genau eine Lage Drahtgewebe umfasst. Jedoch können auch zwei oder mehr Lagen Drahtgewebe vorgesehen sein.

Die, insbesondere durch das Drahtgewebe erzielte, offene Struktur ermöglicht zudem eine natürliche Belüftung des Parkhauses, wodurch sich weitere Einbauten zur Be- und Entlüftung des Parkhauses, insbesondere im Brandfall erübrigen. Das Parkhaus ist brandschutztechnisch somit kein geschlossenes Gebäude. Die Fassadenelemente senken dennoch den Schalldruckpegel aus dem Parkhaus und ermöglichen insbesondere abends eine Abdämmung von Lichtquellen im Parkhaus. Aufgrund der besonders vorteilhaften Eigenschaften des Parkhauses im Sinne des Brandschutzes, kann bevorzugt auch auf eine Sprinkleranlage oder Ähnliches verzichtet werden.

Drahtgewebe ist leicht und günstig, einfach herzustellen und in einfacher Art und Weise an der Außenseite des Parkhauses anbringbar. Zudem ist zweckmäßigerweise Drahtgewebe als Rollware oder Meterware lieferbar oder beziehbar, wodurch eine einfache Herstellbarkeit oder Errichtbarkeit des Parkhauses gewährleistet wird.

Zudem ist Drahtgewebe, ob einlagig oder zweilagig, stabil genug, um auch Kollisionen mit Fahrzeugen, welche auf den Parkgeschossebenen bewegt werden, zu überstehen, sodass auch Fahrzeuge vor einem Sturz von einer der Parkgeschossebenen geschützt oder gesichert sind. Weiter bevorzugt kann oder können die eine Lage aus Drahtgewebe oder die zwei Lagen aus Drahtgewebe mit offenen Maschen oder mit geschlossenen Masche beziehungsweise in einer offenmaschigen oder geschlossenmaschigen Form ausgebildet sein.

Besonders bevorzugt sind die Fassadenelemente, insbesondere die Drahtgewebe-Fassadenelemente mittels Winkelelementen und Spannelementen an der Außenseite beziehungsweise an der Fassade des Parkhauses angeordnet. Die Fassadenelemente können dabei insbesondere nur an einer obersten Parkgeschossebene, beziehungsweise einem Parkhausdach, und einer untersten Parkgeschossebene befestigt und somit nur in einem oberen und einem unteren Bereich des Parkhauses eingespannt sein.

Bevorzugt überspannen dabei die einzelnen Fassadenelemente, beispielsweise die Fassadenelemente aus Drahtgewebe, den Zwischenraum zwischen einem Bodenelement einer Parkgeschossebene und einem Bodenelement einer oberhalb dieser Parkgeschossebene angeordneten zweiten Parkgeschossebene beziehungsweise einem Dach des Parkhauses. Zur Befestigung des Drahtgewebes sind Winkel, insbesondere Winkel aus Metall oder Stahl vorgesehen, welche an den Bodenelementen oder den Kragträgern der Parkgeschossebenen beispielsweise mittels Schrauben befestigt sind.

Ferner kann es auch bevorzugt sein, dass die Fassadenelemente die gesamte Außenseite des Parkhauses überspannen, und dabei nur im oberen Bereich des Parkhauses, beispielsweise an einem Dachelement, und im unteren Bereich des Parkhauses, beispielsweise an der untersten der mindestens einen Parkgeschossebenen, befestigt bzw. eingespannt sind. Das Drahtgewebe ist dann bevorzugt an den Bodenelementen oder den Kragträgern der Parkgeschossebenen eingespannt.

Weiter bevorzugt ist vorgesehen, dass die mindestens eine Parkgeschossebene einen Anprallschutz aufweist.

Durch das Vorsehen eines Anprallschutzes, welcher aus Richtung der Tragstruktur gesehen bevorzugt hinter der mindestens einen Stellfläche der mindestens einen Parkgeschossebene angeordnet ist, kann verhindert werden, dass ein Fahrzeug beispielsweise beim Zurücksetzen oder beim Befahren der mindestens einen Parkgeschossebene dem Rand der mindestens einen Parkgeschossebene zu nahe kommt und schlimmstenfalls das Fassadenelement durchbricht. Der Anprallschutz schränkt somit die Bewegungsfreiheit von Fahrzeugen auf der mindestens einen Parkgeschossebene ein, sodass das Gefahrenpotenzial, welches durch die Bewegung von Fahrzeugen entsteht, minimiert wird.

Ferner dient der mindestens eine Anprallschutz auch dazu, die mindestens eine Stellfläche von Fluchtwegen wie einem Treppenhaus abzugrenzen, so dass diese auch im Notfall frei bleiben, selbst wenn Fahrzeuge auf der Stellfläche abgestellt sind.

Ferner kann es bevorzugt sein, dass am Drahtgewebe, insbesondere zwischen den mindestens zwei Lagen aus Drahtgewebe, Beleuchtungselemente, insbesondere LED-Lampen, zur Beleuchtung des Parkhauses angeordnet sind.

Auch können Beleuchtungselemente derart angeordnet sein, sodass mit ihnen die Außenseite des Parkhauses von unten, d.h. von der Erdgeschossebene oder von dem jeweiligen Bodenniveau der mindestens einen Parkgeschossebene, insbesondere farblich, be- oder angeleuchtet werden kann.

Die Anordnung von Beleuchtungselementen schafft eine kostengünstige Möglichkeit zur nach außen gerichteten Beleuchtung, insbesondere zur Rundumbeleuchtung, der Parkgeschossebenen. Zudem wird für Betrachter außerhalb des Parkhauses ein ästhetischer Anblick des Parkhauses gewährleistet. Insbesondere können die LED-Lampen verschiedene Farben aufweisen oder aussenden. Zudem können die Beleuchtungselemente, insbesondere die LED-Lampen, derart zwischen den Lagen der Drahtgewebe angeordnet sein, dass sie ein ästhetisch ansprechendes Beleuchtungsmuster oder ein Bild wie eine Lichtskulptur ergeben. Zwar können die Beleuchtungselemente zwischen mindestens zwei Lagen aus Drahtgewebe angeordnet sein, jedoch ist bevorzugt vorgesehen, dass die Beleuchtungselemente an einem Fassadenelement befestigt sind, welches nur eine Lage aus Drahtgewebe aufweist. Zudem können Beleuchtungselemente, insbesondere LED-Elemente, zu diesem Zweck auch an weiteren möglichen Fassadenelementen verwendet werden. Sind zwei Lagen Drahtgewebe vorgesehen, so dient die zweite Lage bevorzugt nur dem Schutz eventuell in und/oder an der ersten Lage Drahtgewebe befestigter LED-Elemente.

Bei entsprechender Anordnung der Beleuchtungselemente, insbesondere der LED-Lampen, an den Fassadenelementen des Parkhauses, bilden die Beleuchtungselemente, insbesondere die LED-Lampen, einen überdimensionalen Bildschirm, welcher nach außen leuchtet und auf eine Distanz von bevorzugt bis zu 100 m eine große dynamische Litfaßsäule im Stadtbild bildet. Durch Anordnung von Leuchtelementen an einer Außenseite des Parkhauses und durch die Bildung eines überdimensionalen Bildschirmes aus den Leuchtelementen können Werbeflächen geschaffen werden. Hierdurch wird es möglich, zusätzliche Werbeeinnahmen zu generieren.

Besonders vorteilhaft sind Fassadenelemente, welche durchsichtig oder teildurchsichtig sind. Sind die Fassadenelemente hingegen nicht durchsichtig oder teildurchsichtig ausgebildet, so können die Beleuchtungselemente, insbesondere die LED-Lampen, je nach Anordnung auf der Innenseite oder Außenseite der Fassadenelemente, für eine Beleuchtung der Parkgeschossebenen oder für ein ästhetisch ansprechendes Erscheinungsbild des Parkhauses von außen sorgen.

Vorteilhafterweise ist weiter bevorzugt vorgesehen, dass, insbesondere an der der Tragstruktur abgewandten Seite der mindestens einen Parkgeschossebene, eine Treppenstruktur, insbesondere ein Treppenhaus, an der Parkgeschossebene angeordnet ist, welche die Parkgeschossebene mit der Erdgeschossebene und/oder mit weiteren Parkgeschossebenen verbindet.

Auch können an mehreren, bevorzugt an allen Parkgeschossebenen Treppenstrukturen vorgesehen sein.

Durch die Bereitstellung einer Treppenstruktur, bevorzugt bestehend aus Treppenelementen, oder eines Treppenhauses werden Fluchtwege bereitgestellt, welche die Nutzung des Parkhauses beziehungsweise die Evakuierung des Parkhauses im Falle eines Feuers oder einer anderweitigen Gefahrensituation auch dann gewährleisten, wenn die Fördereinrichtung, insbesondere die Aufzugsanlage nicht nutzbar ist. Aus diesem Grund ist die Treppenstruktur, insbesondere das Treppenhaus, bevorzugt an der der Tragstruktur abgewandten Seite der mindestens einen Parkgeschossebene angeordnet, da diese Seite der Parkgeschossebene am weitesten entfernt von der Tragstruktur und der Fördereinrichtung, insbesondere der Aufzugsanlage, ist. Sollte somit ein Brand in der Fördereinrichtung entstehen, so können Benutzer des Parkhauses, insbesondere Fahrzeugführer, das Parkhaus sicher über die endseitig der Parkgeschossebene angeordneten Treppenstruktur, insbesondere über das Treppenhaus, verlassen.

Besonders bevorzugt ist die Treppenstruktur oder das Treppenhaus ebenfalls mit Fassadenelementen verkleidet, wobei die Fassadenelemente durchsichtig oder teildurchsichtig sein können. Insbesondere bevorzugt kann vorgesehen sein, dass die Fassadenelemente, welche die zur Außenumgebung offenen Seiten der Parkgeschossebenen umschließen, insbesondere die drei Seiten, welche nicht die an der Tragstruktur angeordneten Seiten der Parkgeschossebenen sind, ebenfalls auch die Treppenstruktur und/oder das Treppenhaus umschließen oder an diesem angeordnet sind.

Ferner können weitere Fassadenelemente zwischen der Treppenstruktur, insbesondere dem Treppenhaus und der Parkgeschossebene vorgesehen sein. Durch die Verwendung von Fassadenelementen, welche bevorzugt durchsichtig oder teildurchsichtig sind, für die Treppenstruktur und/oder das Treppenhaus wird ein lichtdurchflutete Treppenstruktur oder ein lichtdurchflutetes Treppenhaus geschaffen, welche beziehungsweise welches darüber hinaus einen luftigen und leichten Eindruck hervorruft. Zudem sind aus Drahtgewebe hergestellte oder Drahtgewebe umfassende Fassadenelemente leicht. Dies ist insbesondere dann vorteilhaft, wenn die Tragstruktur als einziges tragendes Element dazu ausgebildet ist, im Wesentlichen die gesamte Gewichtskraft des Parkhauses und alle auf das Parkhaus wirkenden Kräfte aufzunehmen und wenn gleichzeitig die Treppenstruktur oder das Treppenhaus an der der Tragstruktur abgewandten Seite der mindestens einen Parkgeschossebene angeordnet ist.

In einem solchen Fall ist es zweckmäßig und vorteilhaft, wenn aufgrund der zu vermeidenden Hebelwirkung das Treppenhaus oder die Treppenstruktur vom Gewicht her verhältnismäßig leicht ausgebildet ist. Eine Verwendung von Drahtgewebe als Fassadenelement ist von besonderem Vorteil, da dieses sehr leicht ist.

Ein weiterer Vorteil der Treppenstruktur oder des Treppenhauses ist, dass Personen unabhängig von der Fördereinrichtung die einzelnen Parkgeschossebenen betreten können. Insbesondere wenn ein reger Verkehr im Parkhaus herrscht, das heißt, wenn mehrere Personen oder Fahrzeugführer mit ihren Fahrzeugen das Parkhaus befahren oder verlassen wollen, kann es zu einer zeitweisen Auslastung der Fördereinrichtung kommen. Hier ist es dann von Vorteil, wenn Personen das Parkhaus auch über die Treppenstruktur oder das Treppenhaus betreten oder verlassen können.

Weiter kann bevorzugt vorgesehen sein, dass mindestens eine Parkgeschossebene, insbesondere mehrere, besonders bevorzugt alle Parkgeschossebenen, eine Ladestation umfasst oder umfassen, insbesondere eine Elektroladesäule zum Aufladen eines Akkumulators eines elektrisch antreibbaren Fahrzeugs.

Insbesondere in Stadtgebieten eignet sich die Verwendung von elektrisch antreibbaren Fahrzeugen. Besitzer eines derartigen Fahrzeugs können daher beispielsweise bei einem Stadtbesuch oder über Nacht ihr Fahrzeug in dem Parkhaus abstellen, und die Ladesäule, insbesondere die Elektroladesäule, zum Aufladen des Akkumulators ihres Fahrzeuges nutzen.

Jedoch können auch andere Ladestationen vorgesehen sein. So ist es beispielsweise möglich, dass eine Wasserstofftanksäule oder eine Erdgas- und/oder Benzintanksäule vorgesehen ist, um auch Fahrzeuge mit Wasserstoff-, Gas- oder Benzinmotor zu betanken.

Insbesondere bevorzugt ist vorgesehen, dass die mindestens eine Parkgeschossebene, insbesondere mehrere, besonders bevorzugt alle Parkgeschossebenen, einen Schrank und/oder einen begehbaren Raum aufweist oder aufweisen.

Der Schrank bzw. der begehbare Raum können für Nutzer des Parkhauses anmietbar sein. Somit ist es beispielsweise möglich, dass Nutzer des Parkhauses, welche ihr Fahrzeug in dem Parkhaus geparkt haben, den Schrank oder den begehbaren Raum zur kurzzeitigen Lagerung von Einkäufen nutzen. Darüber hinaus ist es auch möglich, dass der Schrank, welcher insbesondere einer Stellfläche zugeordnet ist, eine Art Packstation im Parkhaus darstellt. Dies bedeutet, dass Nutzer des Parkhauses Waren im Einzelhandel oder im Internet bestellen können, und diese dann an die Packstation geliefert werden, wodurch sie dort für einen Nutzer des Parkhauses zur Abholung bereit stehen.

Besonders vorteilhaft kann vorgesehen sein, dass das Parkhaus eine personalisierte Zugangskontrollvorrichtung, welche insbesondere eine Kamera und/oder eine Schranke umfasst, aufweist, wobei die Zugangskontrollvorrichtung bevorzugt ausgebildet ist, nach erfolgreicher Identifikation einer zum Zugang berechtigten Person den Zugang zum Parkhaus und/oder zur mindestens einen Parkgeschossebene freizugeben.

Die personalisierte Zugangskontrollvorrichtung kann jedoch auch ein Tor oder ein ähnliches oder sonst geeignetes Mittel umfassen. Besonders zweckmäßig ist weiter vorgesehen, dass ein Steuersystem zur Steuerung der Zugangskontrollvorrichtung, beispielsweise der Kamera, der Schranke oder des Tores, vorgesehen ist.

Bevorzugt ist eine Kamera, insbesondere eine Videokamera, Teil der Zugangskontrollvorrichtung. Mittels der Kamera und einer insbesondere computerimplementierten Software kann eine Kennzeichenerfassung und somit eine Erkennung der Kennzeichen von Fahrzeugen erfolgen. Durch Abgleich der erkannten oder erfassten (KFZ-)Kennzeichen mit Einträgen einer abgespeicherten Liste von zum Zugang berechtigten Personen und diesen Personen zugeordneten Kennzeichen, kann die Zugangsberechtigung von Personen beziehungsweise die Berechtigung von Personen, mit ihrem Fahrzeug das Parkhaus zu nutzen, überprüft werden.

Bevorzugt ist ein Buchungssystem vorgesehen ist, welches ausgebildet ist nach einer erfolgten Kennzeichenerfassung eine, insbesondere stellflächenbezogene, Buchung einer Person zuzuordnen.

Das Buchungssystem, welches bevorzugt einen Buchungsserver umfasst, ist insbesondere zu einem Datenaustausch mit der Zugangskontrollvorrichtung ausgebildet. Die Verbindung von Buchungssystem mit einer Zugangskontrollvorrichtung gestattet es, dass nach einer erfolgten Kennzeichenerfassung oder -erkennung eine, insbesondere stellflächenbezogene, Buchung einer Person, beispielsweise einem Fahrzeugführer, zugeordnet werden kann. Unter einer Buchung ist die Nutzung beziehungsweise Anmietung einer Stellfläche auf einer der Parkgeschossebenen zu verstehen.

Sogenannte "feste Nutzer", beispielsweise Anwohner, können eine Stellfläche zu festgelegten Zeiten, beispielsweise über Nacht, nutzen bzw. buchen. Der entsprechende Nutzer muss dafür sein Fahrzeug lediglich in das Parkhaus einfahren. Mittels der Kamera, insbesondere der Videokamera, der Zugangskontrollvorrichtung wird das Kennzeichen des Fahrzeuges erkannt und identifiziert und mittels des Buchungssystems dem Nutzer zugeordnet. Der Nutzer hat zuvor, beispielsweise über einem Online-Anmeldungsplattform, seine Bankdaten und die bevorzugten Buchungszeiträume angegeben. Das Buchungssystem überprüft, ob der Nutzer für den gegebenen Zeitpunkt oder -raum eine Stellfläche gebucht oder reserviert hat. Wenn ja, so gibt die Zugangskontrollvorrichtung den Zugang zum Parkhaus frei.

Wenn der Nutzer mit seinem Fahrzeug das Parkhaus verlässt, kann gegebenenfalls mit der Kamera der Zugangskontrollvorrichtung erneut das Kennzeichen des Fahrzeuges erfasst und identifiziert werden. Der Zeitpunkt des Verlassens des Parkhauses kann im Buchungssystem abgespeichert werden. Hierdurch ist es möglich, eine minutengenaue oder halbstundengenaue Abrechnung oder Buchung durchzuführen. Durch die minutengenaue Abrechnung ist es zudem möglich, dass die begrenzte Ressource "Stellfläche" oder "Stellplatz" besonders kosteneffizient genutzt wird.

Ferner kann vorgesehen sein, dass einem festen Nutzer über das Buchungssystem garantiert wird, dass in einer bestimmten Zeit eine Kapazität vorhanden ist, bzw. dass dem festen Nutzer in der bestimmten Zeit eine Stellfläche zugewiesen werden kann. Dabei ist es möglich, dass die zugewiesene Stellfläche bei jedem Nutzungsvorgang eine andere und nicht die vorherige Stellfläche ist.

Ein Beispiel für eine mögliche Nutzung kann wie folgt aussehen: Ein fester Nutzer parkt nachts von 22:00 Uhr bis 8:00 Uhr in dem Parkhaus. Ein weiterer fester Nutzer, beispielsweise ein Arbeitnehmer mit Arbeitsstelle in der Nähe des Parkhauses, nutzt die gleiche Stellfläche von 8:30 Uhr bis 17:00 Uhr. Der Stellplatz wird von 17:00 Uhr bis 22:00 Uhr dann sogenannten Eventnutzern, beispielsweise Kino- oder Restaurantgästen, zur Verfügung gestellt. Es liegt somit eine Mischform aus fester und bedarfsorientierter Nutzung vor. Jedoch kann auch eine rein bedarfsorientierte Nutzung vorgesehen sein. Auch kann es möglich sein, dass die Stellflächen des Parkhauses, insbesondere die Nutzung der Stellflächen, von einem Computersystem oder einem Buchungssystem überwacht und verwaltet werden, so dass eine optimale Ausnutzung der Stellflächen gewährleistet wird. Darüber hinaus können nicht-feste Nutzer, beispielsweise Nutzer, welche das Parkhaus nur einmal oder nur bei Bedarf nutzen wollen, vorzugsweise durch Ziehen eines Parkscheins an einem Parkscheinautomaten des Parkhauses die Berechtigung zur Nutzung des Parkhauses erwerben. Zudem können auch Computerterminals vorgesehen sein, an denen sich Erstnutzer oder nicht-feste Nutzer unter Hinterlegung mindestens ihrer Kontaktdaten, ihrer Bankdaten und gegebenenfalls des Fahrzeugkennzeichens, für die Nutzung des Parkhauses anmelden und registrieren lassen.

Die Zugangskontrollvorrichtung, bevorzugt umfassend eine Kamera, kann an den einzelnen, bevorzugt an allen, Parkgeschossebenen angeordnet sein. Auch kann die Zugangskontrollvorrichtung am Ein- oder Zugang zum Parkhaus, insbesondere im Erdgeschoss, an dem Eingang der Fördereinrichtung und/oder an den Ein- und Ausgängen des Treppenhauses oder der Treppenstruktur zur Erdgeschossebene und/oder den Parkgeschossebenen angeordnet sein.

Bevorzugterweise ist die Zugangskontrollvorrichtung beziehungsweise das System zur Zugangskontrolle derart ausgebildet, dass sich ein zum Zugang Berechtigter an der Zugangskontrollvorrichtung identifiziert. Eine derartige Identifikation erfolgt zweckmäßig automatisch durch Erfassung oder Erkennung des Fahrzeugkennzeichens unter Benutzung einer Kamera der Zugangskontrollvorrichtung und Abgleichen des Fahrzeugkennzeichens mit einer Datenbank in einem Buchungssystem. Eine Identifikation kann aber beispielsweise auch durch einen Schlüssel, ein Funksignal, welches beispielsweise über einen Funksignalsender übertragen wird, mittels einer Magnetkarte an einem Magnetkartenlesegerät, einem Fingerabdrucksensor, einem Retina-Scanner oder unter Verwendung einer mobilen Mobiltelefon-Applikation stattfinden.

Dabei kann insbesondere vorgesehen sein, dass die Identifikation der zum Zugang berechtigten Person von einem Buchungs- oder Steuersystem vorgenommen wird, welches sich am Ort des Parkhauses befindet, jedoch ist es auch möglich, dass ein Datenabgleich mit einer entfernt vom Parkhaus befindlichen Steuervorrichtung, beispielsweise einer zentralen EDV-Vorrichtung eines Parkhausbetreibers, stattfindet.

Zugangskontrollvorrichtungen können somit am Ein- und/oder Ausgang der Parkgeschossebenen angeordnet sein. Auch am Ein- und/oder Ausgang des Treppenhauses oder der Treppenstruktur können Zugangskontrollvorrichtungen vorgesehen sein.

In einer weiter bevorzugten Ausführungsform ist vorgesehen, dass Verkleidungselemente, insbesondere immergrüne oder begrünte Elemente, an der Tragstruktur und/oder an der Fassade angeordnet sind.

Die Verwendung von derartigen Elementen sorgt für eine ästhetische Außen- oder Innengestaltung des Parkhauses. Da die Elemente nicht vollflächig an der Fassade und/oder an der Tragstruktur angeordnet werden müssen, können diese auch in Mustern oder Strukturen an diesen beiden Elementen angebracht werden. Sind die Verkleidungselemente als immergrüne oder begrünte Elemente ausgebildet, so lässt sich insbesondere eine positive Wirkung auf das Klima auf den Parkgeschossebenen erzielen. Hierbei kann es auch vorgesehen sein, dass immergrüne oder begrünte Elemente auf den Parkgeschossebenen, beispielsweise an der Treppenstruktur oder an den Bodenelementen der Parkgeschossebenen angeordnet sind.

Besonders bevorzugt weist das Parkhaus eine Breite zwischen 5 m und 20 m, bevorzugt zwischen 7 m und 12 m, besonders bevorzugt von 10 m auf. Ferner kann es bevorzugt sein, dass das Parkhaus eine Länge zwischen 10 m und 40 m, bevorzugt zwischen 20 m und 30 m, besonders bevorzugt von 24 m aufweist.

Durch die bevorzugten Abmessungen ist das Parkhaus besonders geeignet als innerstädtisches Parkhaus, insbesondere als Hochgarage, verwendet zu werden. Die bevorzugten Abmessungen sind so gewählt, dass das Parkhaus in die in urbanen Zentren üblicherweise aufzufindenden Bebauungslücken eingepasst werden kann. Zudem lässt sich eine an den Verwendungszweck für eine Stellfläche eines Fahrzeuges angepasste Unterteilung der Parkgeschossebenen bei den beanspruchten Abmessungen besonders einfach erzielen.

In einer weiter bevorzugten Ausführungsform ist vorgesehen, dass die Parkgeschossebenen, insbesondere der Abstand einer Oberseite einer Parkgeschossebene von der Oberseite der darüber liegenden Parkgeschossebene zwischen 2,50 m und 3 m, bevorzugt 2,75 m beträgt. Bei diesen Abständen der Parkgeschossebenen voneinander wird eine optimale Platzausnutzung erreicht, welche es gestattet, auch größere Fahrzeuge wie beispielsweise SUVs im Parkhaus zu bewegen und abzustellen. Zudem können auch Personen oder Fahrzeugführer sich frei auf den Parkgeschossebenen bewegen.

Wenn Träger oder insbesondere Kragträger vorgesehen sind, so beträgt in vertikaler Richtung gesehen die Dicke der Träger oder Kragträger bevorzugt maximal 100 cm, besonders bevorzugt maximal 70 cm, insbesondere bevorzugt 70 cm, sodass bevorzugt eine minimale lichte Höhe zwischen den einzelnen Parkgeschossebenen von 2,05 m bereitgestellt wird.

Bevorzugt ist das Parkhaus geeignet für Personenkraftwagen, insbesondere bis zur Größe von Geländewagen oder Luxuslimousinen. Besonders bevorzugt ist eine Eignung des Parkhauses für Fahrzeuge oder Lastkraftwagen ab beispielsweise 3,5 t Gesamtgewicht nicht vorgesehen.

Weiter bevorzugt kann vorgesehen sein, dass zwischen 5 und 15, bevorzugt zwischen 7 und 10, ganz besonders bevorzugt 8 Parkgeschossebenen an je einer ersten und/oder einer zweiten Außenseite der Tragstruktur vorhanden sind. Bevorzugt beträgt die Gesamthöhe des Parkhauses zwischen 15 m und 40 m, weiter bevorzugt zwischen 20 m und 30 m, besonders bevorzugt 25 m bis 26 m. Diese bevorzugte Anzahl von Parkgeschossebenen sowie die bevorzugten Höhen eignen sich besonders für Parkhäuser, welche in innerstädtischen Zentren zwischen bereits bestehende Häuserfassaden eingefügt werden.

Eine Parkgeschossebene kann bevorzugt eine Länge zwischen 5 m und 15 m, bevorzugt zwischen 8 m und 10 m, besonders bevorzugt 9 m betragen. Umfasst die Parkgeschossebene nur ein Bodenelement bzw. bildet das eine Bodenelement die Parkgeschossebene, so gelten die genannten Maße auch für das Bodenelement, welches beispielsweise als Bodenplatte ausgebildet ist und besonders bevorzugt Stahlbeton umfasst oder aufweist.

Sind mehrere Bodenelemente für eine Parkgeschossebene vorgesehen, d.h. dass die mindestens eine Parkgeschossebene mehrere Bodenelemente aufweist, so kann die Länge der Bodenelemente, insbesondere der als Bodenplatten ausgebildeten Bodenelemente, bevorzugt zwischen 3 m und 5 m, besonders bevorzugt zwischen 3,50 m und 4 m, ganz besonders bevorzugt 3,70 m betragen. Die Breite der Bodenelemente kann zwischen 1 m und 3 m, besonders bevorzugt zwischen 1,40 m und 2 m, ganz besonders bevorzugt 1,50 m betragen.

Je nach den vorgesehenen Abmessungen der Parkgeschossebene und der Bodenelemente können die Bodenelemente oder die Bodenplatten längs oder quer, insbesondere in einem rechten Winkel, zur Längsrichtung der Parkgeschossebene angeordnet werden. Der Abstand zweier bevorzugt benachbarter Kragträger oder Träger beträgt insbesondere dann in etwa die Länge oder die Breite der Bodenelemente oder der Bodenplatten, so dass die Bodenelemente auf den Kragträgern abgelegt werden können und den freien Raum zwischen den Kragträgern oder Trägern überbrücken.

Besonders bevorzugt weist die mindestens eine Stellfläche eine Breite zwischen 2,50 m und 4,50 m, weiter bevorzugt zwischen 3 m und 4 m, besonders bevorzugt von 3,50 m auf. Zudem weist die mindestens eine Stellfläche bevorzugt eine Länge zwischen 4 m und 6 m, weiter bevorzugt zwischen 4,50 m und 5,50 m, besonders bevorzugt von 5 m auf.

Es kann vorgesehen sein, dass die Abmessungen der Stellfläche der DIN-Norm 18040-3 betreffend Abmessungen von PKW-Stellplätzen genügen.

Entsprechend sind dann die Dimensionen der Parkgeschossebene großzügig zu wählen, sodass diese mindestens eine, bevorzugt zwei, insbesondere benachbart angeordnete, Stellflächen aufweisen können. Darüber hinaus können die Parkgeschossebenen so dimensioniert werden, dass zusätzlich zu den Stellflächen ausreichend Platz für Fluchtwege und Zugangswege geschaffen wird.

Durch die bevorzugten Dimensionen und Abmessungen wird ein offener Bereich auf den einzelnen Parkgeschossebenen geschaffen.

Bevorzugt ist das Parkhaus so ausgebildet, dass es einen barrierefreien Zugang gewährleistet und insbesondere familien-, alten- und behindertengerecht ist. Durch die bevorzugten Dimensionen ist ausreichend Platz vorhanden, um auf der mindestens einen Parkgeschossebene zum Beispiel einen Kinderwagen oder einen Rollstuhl aufbauen bzw. entfalten zu können, auch wenn die Stellfläche der Parkgeschossebene mit einem Fahrzeug belegt ist. Ferner wird durch die großzügigen Abmessungen der Stellfläche beziehungsweise der mindestens einen Parkgeschossebene die Gefahr verringert, dass Parkhausnutzer von Fahrzeugen angefahren oder verletzt werden.

Bevorzugt kann vorgesehen sein, dass die Erdgeschossebene eine Bodenversiegelung aufweist. Weiter bevorzugt ist die Bodenversiegelung durchsickerungsfähig ausgebildet, so das Regenwasser durch die Bodenversiegelung sickern und ablaufen kann. Weiter bevorzugt ist unterhalb der Bodenversiegelung ein Drainagesystem vorgesehen.

Besonders bevorzugt kann ein umlaufendes Treppenhaus vorgesehen sein, wobei das umlaufende Treppenhaus an mindestens drei Außenseiten des Parkhauses angeordnet ist.

Ferner kann bevorzugt ein Technikraum vorgesehen sein, welche bevorzugt im Erdgeschoss in der Nähe und/oder an der Tragstruktur angeordnet ist. Im Technikraum können bevorzugt Einrichtungen vorgesehen sein, welche zur Energieversorgung und oder Steuerung der technischen Einrichtungen des Parkhauses dienen.

Weiter ist bevorzugt vorgesehen, dass das Parkhaus einen modularen Aufbau aufweist, wobei bevorzugt das mindestens eine Schachtwandelement und/oder der mindestens eine Kragträger und/oder der mindestens eine Träger und/oder das mindestens eine Bodenelement und/oder das mindestens eine U-Portal und/oder das mindestens eine Treppenelement vorgefertigt sind.

Durch Verwendung von vorgefertigten Elementen und Bauteilen wird eine Fertigteilbauweise ermöglicht, welche auch als modulare Bauweise bezeichnet werden kann.

Eine einfache kostengünstige und schnelle Errichtungsweise für das Parkhaus wird dadurch gewährleistet.

Eine weitere Lösung der der Erfindung zugrundeliegenden Aufgabe liegt in der Bereitstellung eines Verfahrens zur Herstellung eines Parkhauses, insbesondere einer Hochgarage, umfassend die Schritte:
a) Anordnen oder Legen eines Fundamentes,
b) Anordnen einer zentralen Tragsäule in Fertigbauweise auf dem Fundament, wobei die Tragsäule Schachtwandelemente aus Stahlbeton umfasst, welche einen Schacht der Tragsäule bilden,
c) Anordnen von mindestens einer Parkgeschossebene mit einer ersten Seite der Parkgeschossebene an der Tragsäule, wobei die mindestens eine Parkgeschossebene mindestens einen Stellplatz für Fahrzeuge umfasst,
d) Anordnen einer Aufzugsanlage im Schacht der Tragsäule zum im Wesentlichen senkrechten Transport von Fahrzeugen und Personen,
e) Anordnen von Fassadenelementen, bevorzugt aus Drahtgewebe, wobei die Fassadenelemente außenseitig an dem Parkhaus angebracht werden.

Durch das erfindungsgemäße Verfahren wird ein besonders einfaches und kosteneffizientes Verfahren zur Herstellung oder Errichtung eines Parkhauses bereitgestellt. Durch die Verwendung von Schachtwandelementen aus Stahlbeton lässt sich das Parkhaus in einer Fertigbauweise herstellen, wobei die Schachtwandelemente besonders bevorzugt gleichzeitig die Tragsäule und einen innerhalb der Tragsäule angeordneten Schacht bilden oder umfassen. In dem Schacht der Tragsäule wird eine Aufzugsanlage angeordnet. Durch die gleichzeitige Nutzung der Tragsäule als das das Parkhaus tragende Element und als Aufnahmeraum für eine Aufzugsanlage wird ein kostengünstig herzustellendes oder zu errichtendes Parkhaus bereitgestellt. Ferner wird auch das Verfahren zur Herstellung eines Parkhauses vergünstigt.

Ferner kann vorgesehen sein, dass Stütz- oder Säulenelemente an einer zweiten Seite der mindestens einen Parkgeschossebene, welche bevorzugt der ersten Seite der Parkgeschossebene gegenüberliegt, angeordnet werden, wobei besonders bevorzugt die Parkgeschossebene mit der zweiten Seite der Parkgeschossebene auf den Stützoder Säulenelementen aufliegt, abgelegt oder angeordnet wird.

Auch kann vorgesehen sein, dass die mindestens eine Parkgeschossebene mindestens ein Bodenelement umfasst, wobei das Bodenelement besonders bevorzugt mindestens einen Träger aufweist, welcher ganz besonders bevorzugt in dem Bodenelement integriert angeordnet ist. Bevorzugt umfasst dann der Schritt des Anordnens mindestens einer Parkgeschossebene den Schritt des Anordnens mindestens eines Bodenelements, wobei das Bodenelement über den in dem Bodenelement integrierten Träger an der Tragsäule angeschlossen oder angeordnet wird.

Bevorzugt weist die mindestens eine Parkgeschossebene Stahlbeton auf oder besteht aus Stahlbeton. Auch kann bevorzugt vorgesehen sein, dass der Schritt des Anordnens von mindestens einer Parkgeschossebene den Schritt des Anordnen von zwei oder mehr Parkgeschossebenen an der Tragsäule umfasst.

Bevorzugt kann der Verfahrensschritte b) auch den Schritt des Anordnens von Kragträgern, insbesondere umfassend Stahlbeton, an der Tragsäule umfassen.

Bevorzugt kann das Verfahren auch den Schritt des Anordnens von Bodenplatten aus Stahlbeton auf den Kragträgern umfassen.

Hierdurch wird die modulare oder Fertigbauweise beziehungsweise das Fertigteilbauverfahren für die Errichtung oder Herstellung des Parkhauses vereinfacht.

Weiter bevorzugt ist vorgesehen, dass das Verfahren zur Herstellung des Parkhauses den Schritt des Anordnens von Bodenplatten aus Stahlbeton auf den Kragträgern zur Bereitstellung von mindestens zwei Parkgeschossebenen umfasst, wobei die zwei Parkgeschossebenen auf gegenüberliegenden Außenseiten der Tragsäule angeordnet sind, wobei besonders bevorzugt die Tragsäule eine rechteckige oder quadratische Grund- oder Bodenfläche aufweist.

Weiter bevorzugt umfasst das Verfahren zur Herstellung eines Parkhauses zusätzlich den Schritt der Anordnung einer Treppenstruktur, insbesondere eines Treppenhauses, an der mindestens einen Parkgeschossebene, wobei die Treppenstruktur insbesondere bevorzugt an der der Tragsäule abgewandten Seite der mindestens eine Parkgeschossebene angeordnet ist.

Weiter bevorzugt kann vorgesehen sein, dass das Verfahren zur Errichtung oder Herstellung eines Parkhauses den Schritt des Anordnens von, insbesondere immergrünen oder begrünten, Plattenelementen an der Tragsäule oder an der Fassade beziehungsweise außenseitig des Parkhauses vorsieht.

### Kurze Beschreibung der Zeichnungen

Ausführungsbeispiele der Erfindung werden in den Figuren 1 bis 10 dargestellt. Es zeigt
- Fig. 1: eine perspektivische Ansicht eines Parkhauses mit einer Tragstruktur und mehreren Parkgeschossebenen,
- Fig. 2: eine Seitenansicht des Parkhauses mit einer Tragstruktur und mehreren Parkgeschossebenen,
- Fig. 3: eine Aufsicht auf eine Parkgeschossebene eines Parkhauses mit vier Stellplätzen,
- Fig. 4: eine Befestigungsvorrichtung für aus Drahtgewebe bestehende Fassadenelementen,
- Fig. 5: zwei Ausführungsformen für ein Drahtgewebe-Fassadenelement,
- Fig. 6: einen Abschnitt eines Fassadenelements,
- Fig. 7: eine Seitenansicht eines weiteren Parkhauses mit einer Tragstruktur und mehreren Parkgeschossebenen,
- Fig. 8: eine Aufsicht auf eine Parkgeschossebene eines Parkhauses nach Fig. 7 mit vier Stellplätzen,
- Fig. 9: ein E-Portal, und
- Fig. 10: eine Explosionszeichnung von vier im Wesentlichen durchgehenden Säulen umfassend Säulenelemente.

### Detaillierte Beschreibung der Zeichnungen

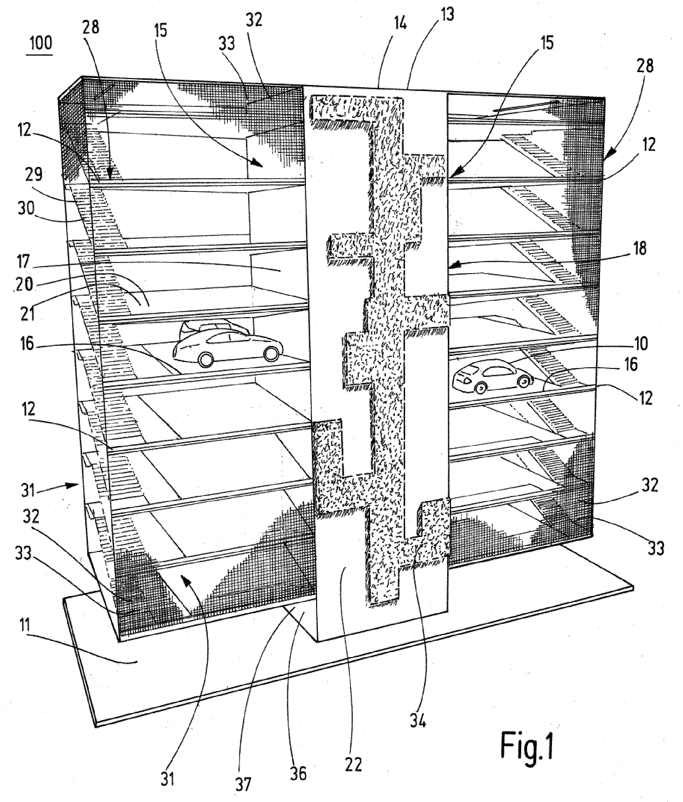

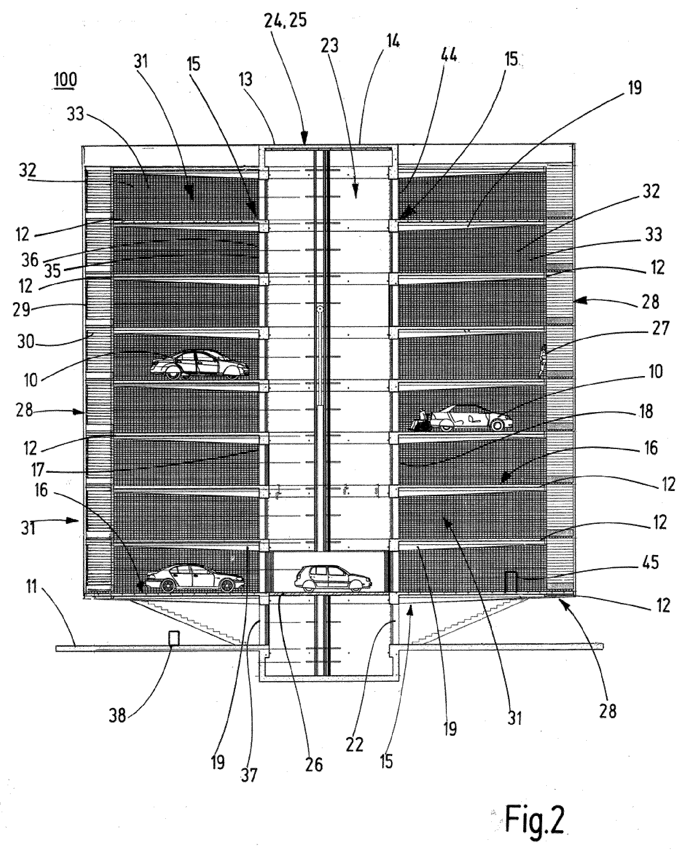

Die Fig. 1 und 2 zeigen in einer perspektivischen Ansicht und in einer Seitenansicht ein Parkhaus 100 für Fahrzeuge 10. Das Parkhaus 100 weist eine Erdgeschossebene 11 sowie insgesamt 16 Parkgeschossebenen 12 auf. Ferner weist das Parkhaus 100 eine als zentrale Tragsäule 13 ausgebildete Tragstruktur 14 auf. Die einzelnen Parkgeschossebenen 12 sind mit einer ersten Seite 15 kragend an der Tragsäule 13 befestigt. Die Parkgeschossebenen 12 weisen Stellflächen 16 auf. Die Parkgeschossebenen 12 sind an einer ersten Außenseite 17 der Tragstruktur sowie einer der ersten Außenseite 17 gegenüberliegenden zweiten Außenseite 18 der Tragstruktur 14 befestigt. Jede Parkgeschossebene 12 weist zwei Stellplätze 16 auf.

In der Seitenansicht der Figur 2 des Parkhauses 100 ist zu erkennen, wie die einzelnen Parkgeschossebenen 12 kragend an der Tragstruktur 14 angeordnet sind. Hierfür sind Kragträger 19 aus Stahlbeton kragend an der Tragstruktur 14 befestigt. Als Bodenplatten 20 ausgebildete Bodenelemente 21 sind derart auf den Kragträgern 19 angeordnet, sodass die Bodenelemente 21 von den Kragträgern 19 getragen werden. Zudem bilden die einzelnen Bodenelemente 21 die Stellflächen 16 oder zumindest Teile der Stellflächen 16. Die als Tragsäule 13 ausgebildete Tragstruktur 14 ist aus Schachtwandelementen 22 (Figur 1) aufgebaut, wobei die Schachtwandelemente 22 aus Stahlbeton hergestellt sind. Die als Bodenplatten 20 ausgebildeten Bodenelemente 21 sind ebenfalls aus Stahlbeton hergestellt. Die Schachtwandelemente 22 der Tragsäule 13 bilden einen Schacht 23, in dem eine als Seilaufzug 24 ausgebildete Fördereinrichtung 25 zum vertikalen Transport von Fahrzeugen 10 angeordnet ist. Der Seilaufzug 24 weist dabei eine Aufzugskabine 26 auf, welche zur Förderung oder zum Transport von Fahrzeugen 10 oder Personen 27 ausgebildet ist.

In den Figuren 1 und 2 ist dargestellt, dass an der der Tragstruktur 14 abgewandten zweiten Seite 28 der Parkgeschossebene 12 eine als Treppenhaus 29 ausgebildete Treppenstruktur 30 angeordnet ist.

Die drei freien Seiten 31 der jeweiligen Parkgeschossebenen 12 sind mit Fassadenelementen 32 bedeckt. Die Fassadenelemente 32 weisen ein Drahtgewebe 33 auf. In Fig. 1 ist das Drahtgewebe nur angedeutet. Die Fassadenelemente 32 sind an den drei freien Seiten 31 der Parkgeschossebene 12 angeordnet. Zudem befindet sich auch ein Fassadenelement 32 zwischen der Treppenstruktur 30 und dem Bereich der Parkgeschossebene 12.

Außenseitig auf den Schachtwandelementen 22 der Tragsäule 13 sind immergrüne beziehungsweise begrünte Plattenelemente 34 angeordnet, welche eine ästhetisch ansprechende Optik des Parkhauses 100 bewirken.

Die Tragsäule 13 weist auf Höhe jeder Parkgeschossebene 12 eine Zufahrt beziehungsweise Ausfahrt 35 auf, durch welche eine Person 27 beziehungsweise ein Fahrzeugführer sein Fahrzeug 10 aus der Aufzugskabine 26 des Seilaufzuges 24 auf die Parkgeschossebene 12 bewegen kann.

Die Zufahrt beziehungsweise Ausfahrt 35 der Aufzugskabine 26 beziehungsweise des Seilaufzuges 24 kann jeweils mit einem Tor 36 oder einer Schranke gesichert sein.

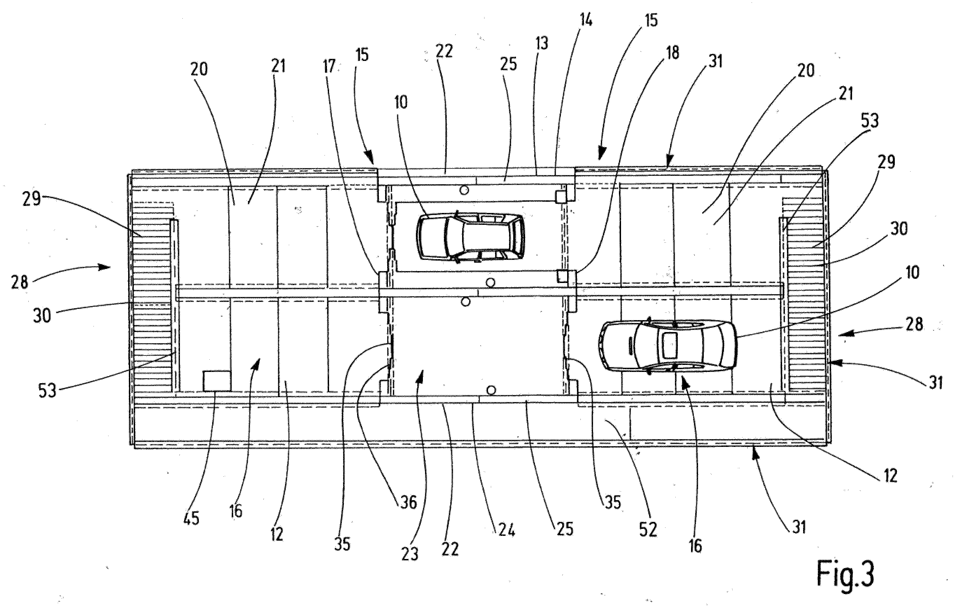

Fig. 3 zeigt eine Aufsicht auf eine Parkgeschossebene 12 des Parkhauses 100. Die Parkgeschossebenen 12 sind an einander gegenüberliegenden ersten und zweiten Außenseiten 17, 18 der Tragsäule 13 kragend angeordnet. Dafür sind Kragträger 19 vorgesehen. Zur Bereitstellung einer Stellfläche 16 sind quer zur Längsrichtung des Parkhauses 100 als Bodenplatten 20 ausgebildete Bodenelemente 21 auf den Kragträgern 19 abgelegt. Die Bodenelemente 21 weisen Stahlbeton auf beziehungsweise sind aus Stahlbeton gefertigt. An einer zweiten Seite 28 der Parkgeschossebene 12, welche der Tragsäule 13 abgewandt ist, ist ein Treppenhaus 29 angeordnet, durch welche Fahrzeugführer oder Personen 27 das Parkhaus 100 im Falle eines Brandes verlassen können, ohne den Seilaufzug 24 benutzen zu müssen. Der Seilaufzug 24 weist eine Aufzugskabine 26 auf, welche zum Transport von Fahrzeugen 10 geeignet ist. In der dargestellten Ausführungsform sind zwei Aufzugskabinen 26 vorgesehen, welche nebeneinander in einem Schacht 23 der Tragsäule 13 angeordnet sind.

Bezugnehmend auf Figur 2 wird nun die Benutzung des Parkhauses 100 erläutert.

Ein Fahrzeug 10 wird von einem nicht dargestellten Fahrzeugführer unter Benutzung des Antriebes des Fahrzeuges 10 auf der Erdgeschossebene 11 an die Tragsäule 13 herangefahren. Auf der Erdgeschossebene 11 befindet sich eine Parkhauseinfahrt 37 sowie eine Zugangskontrollvorrichtung 38. Die Zugangskontrollvorrichtung 38 kann eine Kamera, insbesondere eine Videokamera, umfassen. Mittels der Videokamera und gegebenenfalls einem computerimplementierten Verfahren werden die Kennzeichen der einfahrenden Fahrzeuge erkannt und mittels einer Datenbank einer Buchung bzw. einer zum Zugang zum Parkhaus 100 berechtigten Person zugeordnet. Für die Zuordnung der Buchung kann ein Buchungssystem, bevorzugt umfassend einen Buchungsserver, vorgesehen sein. Nach erfolgter und erfolgreicher Identifizierung des Kennzeichens wird das Tor 36 der Parkhauseinfahrt 37 geöffnet, und der Fahrzeugführer bewegt das Fahrzeug 10 unter eigenem Antrieb des Fahrzeuges 10 in die Aufzugskabine 26 des Seilaufzuges 24.

Nach Wahl der gewünschten Parkgeschossebene 12, welche auch automatisch durch die Identifikation der berechtigten Person stattfinden kann, wird das Fahrzeug 10 mitsamt Fahrzeugführer in vertikaler Richtung zu der gewünschten Parkgeschossebene 12 transportiert. Nachdem die Aufzugskabine 26 zum Stillstand gekommen ist, wird das Tor 36 der entsprechenden Parkgeschossebene 12 geöffnet. Der Fahrzeugführer transferiert beziehungsweise bewegt sein Fahrzeug 10 nun mit dem eigenen Antrieb von der Aufzugskabine 26 des Seilaufzuges 24 auf die Stellfläche 16 der Parkgeschossebene 12. Je nachdem ob der Fahrzeugführer die Zugangsberechtigung zu der Parkgeschossebene 12 auf der ersten Außenseite 17 der Tragsäule 13 oder auf der zweiten Außenseite 18 der Tragsäule 13 hat, öffnet sich ein vorderes oder ein hinteres Tor 36 der Aufzugskabine 26, und der Fahrzeugführer bewegt sein Fahrzeug 10 in Vorwärts- oder Rückwärtsfahrt aus der Aufzugskabine 26 auf die Stellfläche 16.

Nachdem der Fahrzeugführer sein Fahrzeug 10 auf der Stellfläche 16 abgestellt und verschlossen hat, verlässt er das Parkhaus 100 entweder über das endseitig der Parkgeschossebene 12 angeordnete Treppenhaus 29 oder über den Seilaufzug 24.

Wie Fig. 2 zeigt, sind die Parkgeschossebenen 12 beziehungsweise die Stellflächen 16 großzügig gestaltet, so dass die Parkgeschossebenen 12 noch genügend Platz aufweist, um hier nicht dargestellte personalisierte Schränke oder Räume einzurichten.

Ferner können hier nicht dargestellte Beleuchtungselemente und/oder Werbeelemente an den Fassadenelementen 32 angebracht sein.

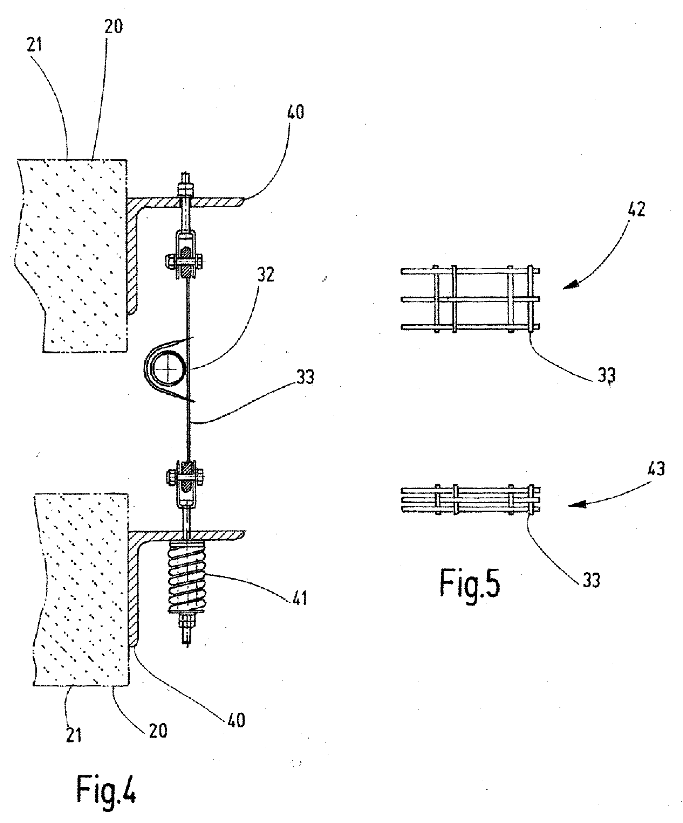

Fig. 4 zeigt eine Befestigungseinrichtung 39 für die Fassadenelemente 32 an den Parkgeschossebenen 12. Zur Befestigung der Fassadenelemente 32 sind Winkel 40 an den Bodenelementen 21 beispielsweise mittels Schrauben befestigt. Zwischen zwei Winkeln 40, welche jeweils an in vertikaler Richtung übereinander angeordneten Bodenelementen 21 befestigt sind, wird das Fassadenelement 32 verspannt.

Um ein belastbares und flexibles Fassadenelement 32 zu gewährleisten, ist ein Federelement 41 vorgesehen, welches das Fassadenelement 32 zwischen den zwei Winkeln 40 vorspannt.

In der Fig. 5 sind zwei Beispiele für die Ausgestaltung des Drahtgewebes 33 des Fassadenelements 32 dargestellt. Das Drahtgewebe 33 kann mit offenen Maschen 42 oder mit geschlossenen Maschen 43 ausgebildet sein.

Ferner kann vorgesehen sein, dass das Fassadenelement 32 aus zwei unterschiedlichen Drahtgeweben 33, nämlich einem Drahtgewebe 33 mit einer offenen Masche 42 und einem Drahtgewebe 33 mit einer geschlossenen Masche 43 aufgebaut ist.

Zur Verstärkung der Zufahrt oder Ausfahrt 35 zu den Parkgeschossebenen 12 beziehungsweise zur Verstärkung der Parkhauseinfahrt 37 sind E-Portale 44 vorgesehen, welche eine Betonüberdeckung von mindestens 5 cm der für die U-Portale 44 verwendeten Stahlbetonteile umfassen.

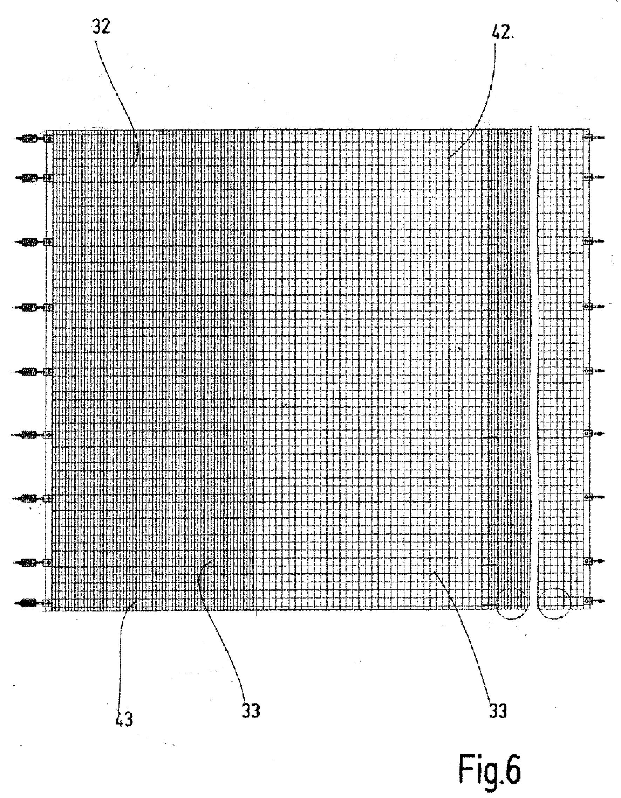

Fig. 6 zeigt einen Abschnitt eines Fassadenelements 32, welches abwechselnd ein Drahtgewebe 33 mit offener Masche 42 und ein Drahtgewebe mit geschlossener Masche 43 aufweist.

In den Fig. 2 und 3 ist eine Ladestation 45, insbesondere eine Elektroladesäule zum Aufladen eines Akkumulators eines elektrisch antreibbaren Fahrzeugs 10, auf einer der Parkgeschossebenen 12 angeordnet.

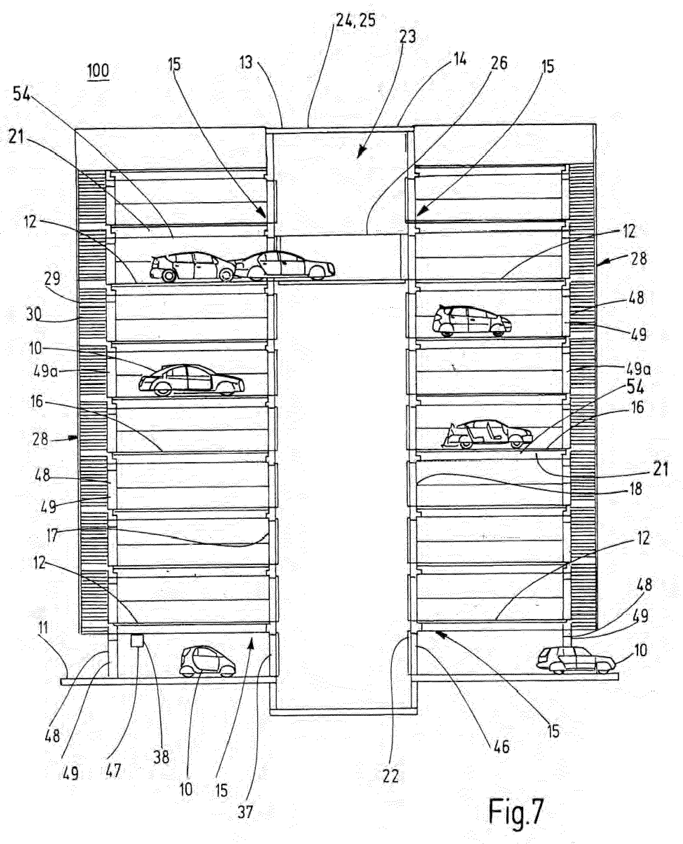

Die Fig. 7 zeigt eine weitere Ausführungsform des Parkhauses 100. Das Parkhaus 100 weist eine Erdgeschossebene 11 sowie Parkgeschossebenen 12 auf, welche mit einer ersten Seite 15 an einer als Tragsäule 13 ausgebildeten Tragstruktur 14 angeordnet sind. Die Parkgeschossebenen 12 sind im Gegensatz zum Parkhaus 100 der Fig. 2 nicht auf Kragträgern abgelegt, sondern sind hingegen mit ihrer ersten Seite 15 direkt an der Tragsäule 13 angeordnet. Dafür umfassen die Parkgeschossebenen 12 Bodenelemente 21, in welche Träger 54 integriert sind. Über die Träger 54 sind die Bodenelemente 21 und damit die Parkgeschossebenen 12 an der Tragsäule 13 angeordnet oder angeschlossen. An einer der ersten Seite 15 gegenüberliegenden zweiten Seite 28 sind jeweils als Säulenelemente 49 ausgebildete Stützelemente 48 angeordnet, auf welchen die Parkgeschossebenen 12 mit deren zweiten Seiten 28 abgelegt sind. Der Auflagepunkt der Parkgeschossebenen 12 auf den Säulenelementen 49 ist dafür ein Abschnitt der in die Bodenelemente 21 integrierten Träger 54. Die Träger 54 liegen somit einerseits auf den Säulenelementen 49 auf. Andererseits sind die Träger 54 auch an der Tragsäule angeordnet. Die Träger übertragen somit die auf die Bodenelemente wirkenden Kräfte und Schwingungen auf die Tragsäule 13 und, in einem geringeren Umfang auf die Säulenelemente 49. Die Säulenelemente 49 sind in vertikaler Richtung gesehenen übereinander angeordnet, so dass diese geänderte Last- oder Kraftverteilung bzw. in den Parkgeschossebenen 12 auftretende Schwingungen in die Erdgeschossebene 11 ableiten können. Mit anderen Worten wird ein Großteil des Gesamtgewichts des Parkhauses 100 und der auf das Parkhaus 100 wirkenden Kräfte über die Tragsäule 13 auf die Erdgeschossebene 11 und das Erdreich abgeleitet. Durch das Befahren der Parkgeschossebenen 12 mit Fahrzeugen 10 bzw. durch sich auf den Parkgeschossebenen 12 bewegende Personen entstehende Kraftungleichgewichte und Schwingungen. Diese werden über die in die Bodenelemente 21 integrierten Träger 54 auf die Säulenelemente 49 übertragen und von diesen aufgefangen und abgeleitet. Die Säulenelemente 49 bilden eine im Wesentlichen durchgehende Säule 49a von der Erdgeschossebene 11 bis zum Dach des Parkhauses 100. Auch das Parkhaus 100 der Fig. 7 weist hier nicht dargestellte Fassadenelemente 32 auf. Eine Kamera 47 einer Zugangskontrollvorrichtung 38 ist an der Unterseite einer unteren Parkgeschossebene 12 befestigt. Mittels der Kamera 47 können die Kennzeichen von Fahrzeugen 10 erfasst und erkannt werden. Die Fahrzeuge können nach der Erfassung einem Fahrzeughalter mit Hilfe eines Buchungssystems zugeordnet werden. In der Erdgeschossebene 11 ist eine Parkhauseinfahrt 37 sowie eine Parkhausausfahrt 46 vorgesehen.

Darüber hinaus entspricht das Parkhaus 100 der Fig. 7 im Wesentlichen dem in den Fig. 1 und 2 dargestellten Parkhaus 100.

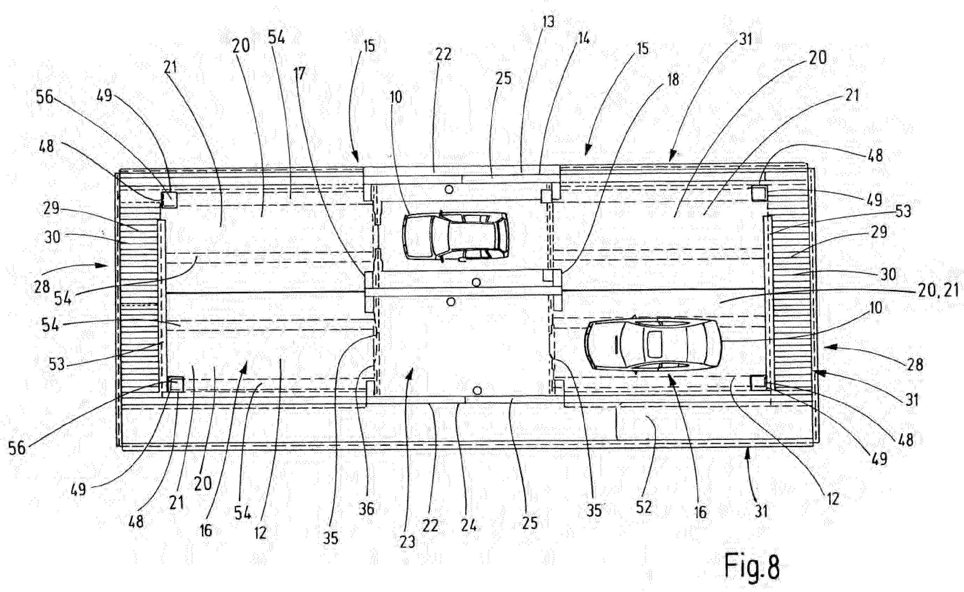

Die Fig. 8 zeigt eine Aufsicht auf eine Parkgeschossebene 12 des Parkhauses 100 der Fig. 7. In den äußeren Randbereichen an einer zweiten Seite 28 der Parkgeschossebene 12 sind als Säulenelemente 49 ausgebildete Stützelemente 48 angeordnet. Die beiden Parkgeschossebenen 12 in Fig. 8 weisen jeweils zwei Bodenelemente 21 beziehungsweise Bodenplatten 20 auf, welches mit einer ersten Seite 15 an einer Tragsäule 13 angeordnet ist und mit einer zweiten Seite 28 auf den Säulenelementen 49 aufliegt. In jede der Bodenplatten 21 sind Träger 54 integriert, welche mit gestrichelten Linien angedeutet sind. An den äußeren Trägern 54 ist dargestellt, dass die Träger 54 mit ihren von der Tragstruktur abgewandten ersten Enden 56 auf den Säulenelementen 49 aufliegen.

Die Parkgeschossebenen 12 der Fig. 3 und 8 weisen zudem jeweils einen Anprallschutz 53 zwischen der Stellfläche 16 und dem Treppenhaus 29 auf. Der Anprallschutz 53 besteht aus Stahlbeton.

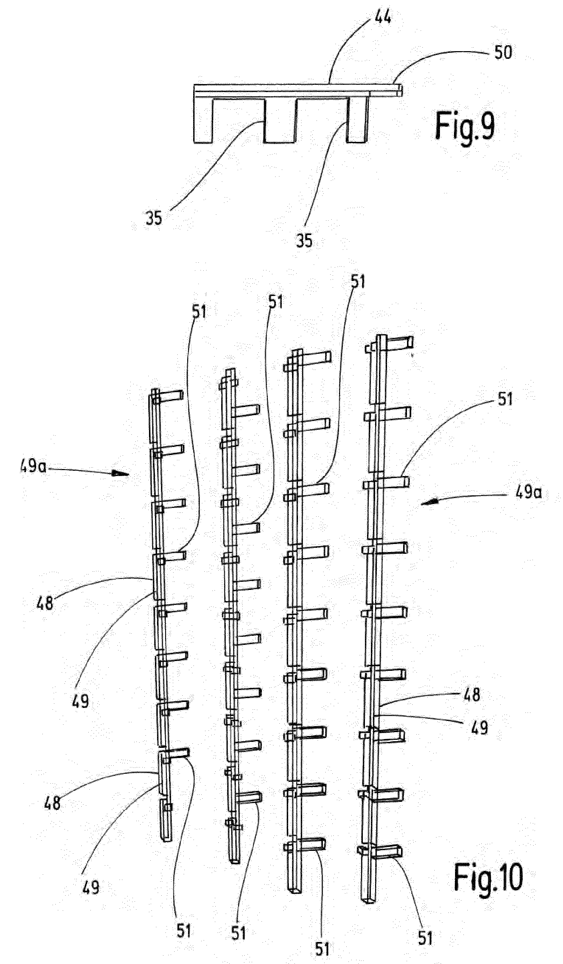

Die Fig. 9 zeigt ein E-Portal 44. E-Portale 44 sind auf den einzelnen Parkgeschossebenen 12 und auf der Erdgeschossebene 11 zur Verstärkung der Zufahrt oder Ausfahrt 35 der Fördereinrichtung 25 vorgesehen sind. Das E-Portal 44 weist zwei nebeneinander angeordnete Zu- bzw. Ausfahrten 35 auf, welche einen Zugang von den Stellflächen 16 der Parkgeschossebenen 12 zu der Fördereinrichtung 25 gestatten. Das E-Portal weist auf einer Seite eine Auskragung 50 auf, auf der eine Stahlbetonelement 52 (Fig. 3 und 8) abgelegt werden kann. Das Stahlbetonelement 52 dient als eine für Fahrzeughalter oder Personen begehbare Fläche, über die die Personen von einer Seite des Parkhauses 100 zur anderen Seite des Parkhauses 100 und somit von einem Treppenhaus 29 zum gegenüberliegenden Treppenhaus 29 gelangen können.

Fig. 10 zeigt eine Explosionszeichnung von vier im Wesentlichen durchgehenden Säulen 49a umfassend Stützelemente 48, welche als Säulenelemente 49 ausgebildet sind (Fig. 7). In zweckmäßig gewählten Abständen sind in vertikaler Richtung der durchgehenden Säulen 49a Auflager 51 angeordnet, auf welchen die Treppenelemente der Treppenstruktur 30 des Parkhauses 100 abgelegt werden.

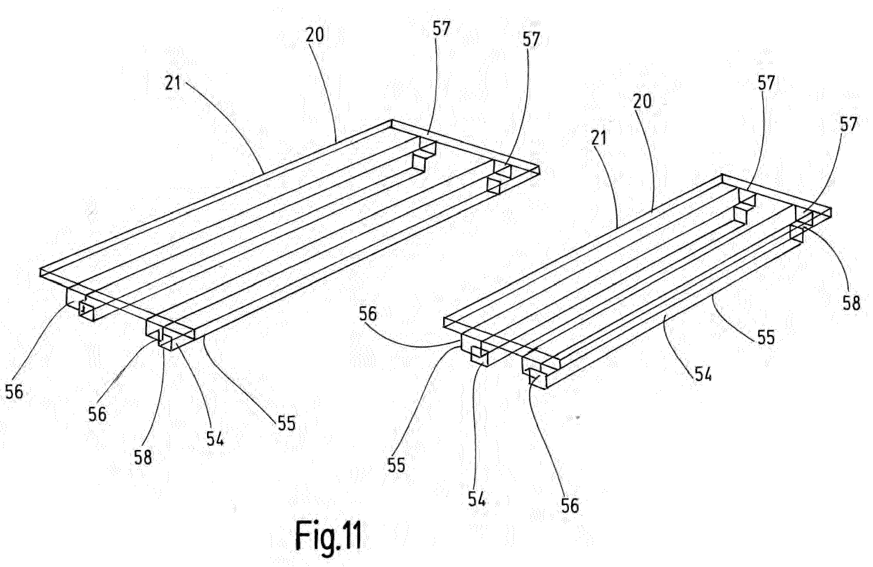

In Fig. 11 sind zwei als Bodenplatte 20 ausgebildete Bodenelemente dargestellt. Die Bodenelemente weisen auf ihrer Unterseite je zwei längliche Verstärkungen 55 auf. Die Verstärkungen 55 umfassen in die Bodenelemente 21 integrierte Träger 54, insbesondere Träger 54 aus Stahlbeton oder Stahl. Die Verstärkungen 55 beziehungsweise die Träger 54 weisen erste Enden 56 auf, welche auf Säulenelemente 49 (Fig. 7 und 8) aufgelegt werden können. Mit gegenüberliegenden zweiten Enden 57 können die Bodenelemente 21 zur Bildung einer Parkgeschossebene 12 an einer Tragstruktur 14 oder Tragsäule 13 angeordnet oder befestigt werden. Für die Befestigung an den Säulenelementen 49 und an der Tragstruktur 14 sind Auskerbungen 58 an den Enden 56, 57 der Verstärkungen 55 beziehungsweise Träger vorgesehen.

### Liste der Bezugszeichen

- 100: Parkhaus

- 10: Fahrzeug
- 11: Erdgeschossebene
- 12: Parkgeschossebene
- 13: Tragsäule
- 14: Tragstruktur
- 15: Erste Seite
- 16: Stellfläche
- 17: Erste Außenseite
- 18: Zweite Außenseite
- 19: Kragträger

- 20: Bodenplatte
- 21: Bodenelemente
- 22: Schachtwandelemente
- 23: Schacht
- 24: Seilaufzug
- 25: Fördereinrichtung
- 26: Aufzugskabine
- 27: Person
- 28: Zweite Seite
- 29: Treppenhaus

- 30: Treppenstruktur
- 31: Freie Seite
- 32: Fassadeelement
- 33: Drahtgewebe
- 34: Element
- 35: Ausfahrt
- 36: Tor
- 37: Parkhauseinfahrt
- 38: Zugangskontrollvorrichtung
- 39: Befestigungseinrichtung

- 40: Winkel
- 41: Federelement
- 42: Offene Masche
- 43: Geschlossene Masche
- 44: E-Portal
- 45: Ladestation

- 46: Parkhausausfahrt
- 47: Kamera
- 48: Stützelement
- 49: Säulenelement
- 49a: Durchgehende Säule
- 50: Auskragung

- 51: Auflager
- 52: Stahlbetonelement
- 53: Anprallschutz
- 54: Träger
- 55: Verstärkung

- 56: Erstes Ende
- 57: Zweites Ende
- 58: Auskerbung

## Patentansprüche

1. Parkhaus (100) für Fahrzeuge (10), insbesondere Hochgarage, umfassend eine Erdgeschossebene (11) und mindestens eine oberhalb der Erdgeschossebene (11) angeordnete Parkgeschossebene (12), eine Tragstruktur (14) mit einem Schacht (23), mindestens eine Fördereinrichtung (25) zum im Wesentlichen vertikalen Transport von Fahrzeugen (10), wobei die Fördereinrichtung (25) in dem Schacht (23) der Tragstruktur (14) angeordnet ist, wobei die mindestens eine Parkgeschossebene (12) mindestens eine Stellfläche (16) für mindestens ein Fahrzeug (10) umfasst, wobei das Parkhaus zu einem Transfer eines Fahrzeuges (10) zwischen der Fördereinrichtung (25) und einer Parkposition auf der mindestens einen Stellfläche (16) unter eigenem Antrieb des Fahrzeuges (10) ausgebildet ist, wobei mindestens eine der Parkgeschossebenen (12) mit einer ersten Seite (15) an der Tragstruktur (14) angeordnet ist.

2. Parkhaus (100) nach Anspruch 1, **dadurch gekennzeichnet, dass** die mindestens eine Parkgeschossebene (12) mit einer, bevorzugt der ersten Seite (15) der Parkgeschossebene (12) gegenüberliegenden, zweiten Seite (28) der Parkgeschossebene (12) auf Stützelementen (49), insbesondere Säulenelementen (48), aufliegt und/oder mit Stützelementen (49), insbesondere Säulenelementen (48), verbunden ist, und/oder dass die mindestens eine Parkgeschossebene (12) mit der ersten Seite (15) kragend an der Tragstruktur (14) angeordnet ist.

3. Parkhaus (100) nach Anspruch 1 oder 2, **dadurch gekennzeichnet, dass** das Parkhaus ein Fertigteilgebäude ist.

4. Parkhaus (100) nach einem der vorstehenden Ansprüche, **dadurch gekennzeichnet, dass** die Fördereinrichtung (25) zum Transport von Fahrzeugen (10) und von Personen (27) mit oder ohne Fahrzeug (10) ausgebildet ist.

5. Parkhaus (100) nach einem der vorstehenden Ansprüche, **dadurch gekennzeichnet, dass** die Tragstruktur (14) ausgebildet ist, im Wesentlichen die gesamte Gewichtskraft des Parkhauses und alle auf das Parkhaus wirkenden Kräfte aufzunehmen, wobei die Tragstruktur (14) insbesondere zentral im Parkhaus angeordnet ist.

6. Parkhaus (100) nach einem der vorstehenden Ansprüche, **dadurch gekennzeichnet, dass** die Tragstruktur (14) eine Tragsäule (13) mit einem Schacht (23) für die Fördereinrichtung (25) ist, und dass die Fördereinrichtung (25) in dem Schacht (23) der Tragsäule (13) angeordnet ist, wobei die Fördereinrichtung (25) bevorzugt eine zum Transport von Fahrzeugen (10) und Personen (27) ausgebildete Aufzugsanlage, besonders bevorzugt ein Lift oder ein Fahrstuhl, ganz besonders bevorzugt ein Seilaufzug (24), ist.

7. Parkhaus (100) nach einem der vorstehenden Ansprüche, **dadurch gekennzeichnet, dass** die mindestens eine Parkgeschossebene (12) mindestens ein Bodenelement (21) aufweist, wobei das mindestens eine Bodenelement (21) mindestens einen Teil der Stellfläche (16) der mindestens einen Parkgeschossebene (12) bildet.

8. Parkhaus (100) nach einem der vorstehenden Ansprüche, **dadurch gekennzeichnet, dass** das Bodenelement (21) eine Bodenplatte (20) ist, wobei die Bodenplatte (20) bevorzugt Stahlbeton aufweist oder aus Stahlbeton besteht, und/oder dass die Tragstruktur (14) mindestens ein Schachtwandelement (22) umfasst, wobei das mindestens eine Schachtwandelement (22) bevorzugt Stahlbeton aufweist oder aus Stahlbeton besteht.

9. Parkhaus (100) nach einem der vorstehenden Ansprüche, **dadurch gekennzeichnet, dass** mindestens ein Fassadenelement (32) vorgesehen ist, wobei das Fassadenelement (32) bevorzugt durchsichtig oder teildurchsichtig ausgebildet ist, wobei besonders bevorzugt das Fassadenelement (32) außenseitig an dem Parkhaus angeordnet ist, wobei das Fassadenelement (32) ganz besonders bevorzugt mindestens eine Lage Drahtgewebe (33) umfasst, wobei weiter ganz besonders bevorzugt an dem Drahtgewebe (33) Beleuchtungselemente, insbesondere LED-Lampen, zur Beleuchtung des Parkhauses angeordnet sind.

10. Parkhaus (100) nach einem der vorstehenden Ansprüche, **dadurch gekennzeichnet, dass**, insbesondere an einer der Tragstruktur (14) abgewandten zweiten Seite (18) der mindestens einen Parkgeschossebene (12), eine Treppenstruktur (30), insbesondere ein Treppenhaus (29), an der Parkgeschossebene (12) angeordnet ist, welche die Parkgeschossebene (12) mit der Erdgeschossebene (11) und/oder mit weiteren Parkgeschossebenen (12) verbindet.

11. Parkhaus (100) nach einem der vorstehenden Ansprüche, **dadurch gekennzeichnet, dass** mindestens eine Parkgeschossebene (12) eine Ladestation (45) umfasst, insbesondere eine Elektroladesäule zum Aufladen eines Akkumulators eines elektrisch antreibbaren Fahrzeugs (10), und/oder dass das Parkhaus eine Zugangskontrollvorrichtung (38) aufweist, wobei die Zugangskontrollvorrichtung (38) bevorzugt ausgebildet ist, nach erfolgreicher Identifikation einer zum Zugang berechtigten Person (27) den Zugang zum Parkhaus und/oder zur mindestens einen Parkgeschossebene (12) freizugeben.

12. Parkhaus (100) nach Anspruch 11, **dadurch gekennzeichnet, dass** die Zugangskontrollvorrichtung (38) eine Kamera (47) zur Kennzeichenerfassung von Fahrzeugen (10) umfasst, und/oder dass ein Buchungssystem vorgesehen ist, welches ausgebildet ist nach einer erfolgten Kennzeichenerfassung eine, insbesondere stellflächenbezogene, Buchung einer Person (27) zuzuordnen.

13. Parkhaus (100) nach einem der vorstehenden Ansprüche, **dadurch gekennzeichnet, dass** das Parkhaus eine Breite zwischen 5 m und 20 m, bevorzugt zwischen 7 m und 12 m, besonders bevorzugt von 10 m aufweist, und dass das Parkhaus eine Länge zwischen 10 m und 40 m, bevorzugt zwischen 20 m und 30 m, besonders bevorzugt von 24 m aufweist.

14. Parkhaus (100) nach einem der vorstehenden Ansprüche, **dadurch gekennzeichnet, dass** das Parkhaus einen modularen Aufbau aufweist, wobei bevorzugt das mindestens eine Schachtwandelement (22) und/oder der mindestens eine Kragträger (19) und/oder der mindestens eine Träger und/oder das mindestens eine Bodenelement (21) und/oder das mindestens eine U-Portal (44) und/oder die mindestens eine Treppenstruktur (30) vorgefertigt sind.

15. Verfahren zur Herstellung eines Parkhauses (100), insbesondere Hochgarage, umfassend die Schritte:
a) Anordnen oder Legen eines Fundamentes,
b) Anordnen einer zentralen Tragsäule (13) in Fertigbauweise auf dem Fundament, wobei die Tragsäule (13) Schachtwandelemente (22) aus Stahlbeton umfasst, welche einen Schacht (23) der Tragsäule (13) bilden,
c) Anordnen von mindestens einer Parkgeschossebene (12) mit einer ersten Seite (15) der Parkgeschossebene (12) an der Tragsäule (13), wobei die mindestens eine Parkgeschossebene mindestens eine Stellfläche (16) für Fahrzeuge (10) umfasst,
d) Anordnen einer Aufzugsanlage im Schacht (23) der Tragsäule (13) zum im Wesentlichen senkrechten Transport von Fahrzeugen (10) und Personen (27),
e) Anordnen von Fassadenelementen (32), bevorzugt aus Drahtgewebe (33), wobei die Fassadenelemente (32) außenseitig an dem Parkhaus angebracht werden.
